# EUROPEAN PATENT SPECIFICATION

(11) **EP 4 434 286 B1**
(45) Date of publication and mention of the grant of the patent: **19.11.2025**
(21) Application number: 22822246.9
(22) Date of filing: 31.10.2022
(51) Int. Cl.: H04W 72/25, H04W 72/40, H04W 74/0808, H04W 72/23

(54) **SIDELINK RESOURCE PROTECTION FOR FIRST TRANSMISSIONS IN APERIODIC TRAFFIC**
SIDELINK-RESSOURCENSCHUTZ FÜR ERSTE ÜBERTRAGUNGEN IN APERIODISCHEM VERKEHR
PROTECTION DE RESSOURCES DE LIAISON LATÉRALE POUR DES PREMIÈRES TRANSMISSIONS DANS UN TRAFIC APÉRIODIQUE

(30) Priority: 15.11.2021 GR 20210100797
(43) Date of publication of application: 25.09.2024
(73) Proprietor: QUALCOMM INCORPORATED, San Diego, California 92121-1714 (US)
(72) Inventor: LIU, Libin, San Diego, California 92121-1714 (US); STEFANATOS, Stelios, San Diego, California 92121-1714 (US); GUBESKYS, Arthur, San Diego, California 92121-1714 (US); SARKIS, Gabi, San Diego, California 92121-1714 (US); NGUYEN, Tien Viet, San Diego, California 92121-1714 (US); PATIL, Shailesh, San Diego, California 92121-1714 (US)
(74) Representative: Bardehle Pagenberg Partnerschaft mbB Patentanwälte Rechtsanwälte
(86) International application number: PCT/US2022/078965
(87) International publication number: WO 2023/086742

(56) References cited:
- EP-A1- 3 890 417
- INTERDIGITAL ET AL: "NR Sidelink Resource Allocation Mechanism for Mode 2", vol. RAN WG1, no. Prague, Czech; 20190826 - 20190830, 16 August 2019 (2019-08-16), XP051765634, Retrieved from the Internet <URL:http://www.3gpp.org/ftp/tsg_ran/WG1_RL1/TSGR1_98/Docs/R1-1909030.zip> [retrieved on 20190816]

## Description

### FIELD OF TECHNOLOGY

The following relates to wireless communications, including sidelink resource protection for first transmissions in aperiodic traffic.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some wireless communications systems, a UE may communicate with one or more other UEs via sidelink communications. In some cases, the UE may communicate in aperiodic traffic. Techniques for reducing collisions in aperiodic sidelink communications may be improved.

3GPP DRAFT R1-1909030 from Interdigital et al relates to "NR sidelink resource allocation mechanism for mode 2". This document discloses, inter-alia, a UE performing autonomous resource selection based on sensing. Collisions between UEs autonomous resource reservations are partially avoided by announcing a semi-persistent resource reservation information in sidelink control information (SCI).

Document EP 3 890 417 A1 relates to wireless resource selection. Wireless resources may be determined for communications between wireless devices. A wireless device may select resources based on measuring one or more channels (e.g., associated with sidelink transmission, feedback transmission, etc.). Resource selection may comprise exclusion of certain resources being used for other communications and/or exclusion or selection of resources based on one or more priorities.

### SUMMARY

The claimed invention is defined by the independent claims. Further embodiments of the claimed invention are defined in the dependent claims.

The described techniques relate to improved methods, systems, devices, and apparatuses that support sidelink resource protection for first transmissions in aperiodic traffic. Generally, the described techniques provide for a user equipment (UE) to protect a first (e.g., initial) data transmission from collisions in aperiodic traffic by utilizing semi-persistent scheduling (SPS)-type resource reservations. In some cases, a first UE may perform a sensing procedure during a sensing window to identify a first available sidelink resource. The first UE may select the first sidelink resource for transmitting a first message and one or more remaining sidelink resources for transmitting one or more additional messages that each differ from the first message (e.g., each message carries different data packets). In some cases, the first UE may transmit the first message in the first sidelink resource, where the first message may indicate a reservation for the one or more remaining sidelink resources and a resource utilization probability vector for the one or more remaining sidelink resources.

In some examples, a second UE (e.g., in sidelink communications with the first UE) may receive the first message during the sensing window. If the resource utilization probability for the one or more remaining sidelink resources reserved by the first UE fails to satisfy (e.g., is lower than) a resource utilization probability threshold, then the second UE may select and transmit its own sidelink message during a first sidelink resource of the one or more remaining sidelink resources, disregarding the first UE's reservation. Additionally or alternatively, if the resource utilization probability of the one or more remaining sidelink resources reserved by the first UE satisfies (e.g., is greater than) the resource utilization probability threshold, then the second UE may select a second sidelink resource for transmitting the sidelink message. The second UE may transmit the sidelink message in the selected sidelink resource.

A method for wireless communication at a first UE is described. The method includes performing a sensing procedure during a sensing window to identify that a first sidelink resource is available, selecting, based on the sensing procedure, the first sidelink resource for transmitting a first message and one or more remaining sidelink resources for transmitting one or more additional messages that each differ from the first message, and transmitting, via the first sidelink resource, the first message indicating a reservation for the one or more remaining sidelink resources and a resource utilization probability vector for the one or more remaining sidelink resources.

Another apparatus for wireless communication at a first UE is described. The apparatus includes means for performing a sensing procedure during a sensing window to identify that a first sidelink resource is available, means for selecting, based on the sensing procedure, the first sidelink resource for transmitting a first message and one or more remaining sidelink resources for transmitting one or more additional messages that each differ from the first message, and means for transmitting, via the first sidelink resource, the first message indicating a reservation for the one or more remaining sidelink resources and a resource utilization probability vector for the one or more remaining sidelink resources.

A non-transitory computer-readable medium storing code for wireless communication at a first UE is described. The code includes instructions executable by a processor to perform a sensing procedure during a sensing window to identify that a first sidelink resource is available, select, based on the sensing procedure, the first sidelink resource for transmitting a first message and one or more remaining sidelink resources for transmitting one or more additional messages that each differ from the first message, and transmit, via the first sidelink resource, the first message indicating a reservation for the one or more remaining sidelink resources and a resource utilization probability vector for the one or more remaining sidelink resources.

Some examples of the method, apparatuses, and non-transitory computer-readable medium described herein may further include operations, features, means, or instructions for transmitting a second message via a second sidelink resource of the one or more remaining sidelink resources, the second message including a reservation for one or more additional sidelink resources and a second resource utilization probability vector for the one or more additional sidelink resources.

Some examples of the method, apparatuses, and non-transitory computer-readable medium described herein may further include operations, features, means, or instructions for receiving, from a base station, a configuration message indicating a number of sidelink resources to reserve and a periodicity for the number of sidelink resources and transmitting, via the first sidelink resource, the first message indicating the number of sidelink resources and the periodicity.

Some examples of the method, apparatuses, and non-transitory computer-readable medium described herein may further include operations, features, means, or instructions for determining one or more parameters from an available parameter pool based on failing to receive a configuration message from a base station and transmitting, via the first sidelink resource, the first message indicating the one or more parameters.

In some examples of the method, apparatuses, and non-transitory computer-readable medium described herein, transmitting the first message may include operations, features, means, or instructions for transmitting, via the first sidelink resource, the first message indicating a number of resources being reserved and a periodicity of the reserved resources.

In some examples of the method, apparatuses, and non-transitory computer-readable medium described herein, the number of resources may be randomly selected, the periodicity may be randomly selected, or both.

In some examples of the method, apparatuses, and non-transitory computer-readable medium described herein, transmitting the first message may include operations, features, means, or instructions for transmitting, via the first sidelink resource, the first message indicating the reservation that identifies a time period, a time slot, a frequency band, a sub-channel, a bandwidth part, or any combination thereof.

In some examples of the method, apparatuses, and non-transitory computer-readable medium described herein, transmitting the first message may include operations, features, means, or instructions for transmitting sidelink control information indicating the resource utilization probability vector for the one or more remaining sidelink resources.

Some examples of the method, apparatuses, and non-transitory computer-readable medium described herein may further include operations, features, means, or instructions for receiving a negative acknowledgement (NACK) for the first message and transmitting, via an additional sidelink resource, an additional message based on the NACK, where the additional message may be a retransmission of the first message.

Some examples of the method, apparatuses, and non-transitory computer-readable medium described herein may further include operations, features, means, or instructions for identifying data available to transmit during the one or more remaining sidelink resources and estimating a resource utilization probability for each of the one or more remaining sidelink resources based on the identifying.

Some examples of the method, apparatuses, and non-transitory computer-readable medium described herein may further include operations, features, means, or instructions for receiving, from a second UE during the sensing window, a reservation message indicating a second reservation for a second sidelink resource of the one or more remaining sidelink resources and a second resource utilization probability vector and transmitting, during the first sidelink resource, the first message indicating the reservation for the second sidelink resource of the one or more remaining sidelink resources based on a resource utilization probability indicated in the second resource utilization probability vector for the second sidelink resource failing to satisfy a resource utilization probability threshold.

Some examples of the method, apparatuses, and non-transitory computer-readable medium described herein may further include operations, features, means, or instructions for receiving, from a base station, a configuration message indicating the resource utilization probability threshold.

Some examples of the method, apparatuses, and non-transitory computer-readable medium described herein may further include operations, features, means, or instructions for selecting, from a set of multiple resource utilization probability thresholds, the resource utilization probability threshold, where the selection may be rand om or according to a threshold selection rule.

A method for wireless communication at a second UE is described. The method includes receiving, during a sensing window, a first message indicating a reservation for one or more remaining sidelink resources and a resource utilization probability vector for the one or more remaining sidelink resources, selecting a first sidelink resource of the one or more remaining sidelink resources or a second sidelink resource for transmitting a sidelink message based on the resource utilization probability vector, and transmitting the sidelink message in the selected sidelink resource.

Another apparatus for wireless communication at a second UE is described. The apparatus includes means for receiving, during a sensing window, a first message indicating a reservation for one or more remaining sidelink resources and a resource utilization probability vector for the one or more remaining sidelink resources, means for selecting a first sidelink resource of the one or more remaining sidelink resources or a second sidelink resource for transmitting a sidelink message based on the resource utilization probability vector, and means for transmitting the sidelink message in the selected sidelink resource.

A non-transitory computer-readable medium storing code for wireless communication at a second UE is described. The code includes instructions executable by a processor to receive, during a sensing window, a first message indicating a reservation for one or more remaining sidelink resources and a resource utilization probability vector for the one or more remaining sidelink resources, select a first sidelink resource of the one or more remaining sidelink resources or a second sidelink resource for transmitting a sidelink message based on the resource utilization probability vector, and transmit the sidelink message in the selected sidelink resource.

Some examples of the method, apparatuses, and non-transitory computer-readable medium described herein may further include operations, features, means, or instructions for receiving a second message via the first sidelink resource of the one or more remaining sidelink resources based on the first message.

Some examples of the method, apparatuses, and non-transitory computer-readable medium described herein may further include operations, features, means, or instructions for receiving, from a base station, a configuration message indicating a number of sidelink resources to reserve and a periodicity for the number of sidelink resources and receiving, via the first sidelink resource, the first message indicating the number of sidelink resources and the periodicity.

Some examples of the method, apparatuses, and non-transitory computer-readable medium described herein may further include operations, features, means, or instructions for determining one or more parameters from an available parameter pool based on failing to receive a configuration message from a base station and receiving, via the first sidelink resource, the first message indicating the one or more parameters.

In some examples of the method, apparatuses, and non-transitory computer-readable medium described herein, the selecting may include operations, features, means, or instructions for selecting the first sidelink resource based on a resource utilization probability of the resource utilization probability vector for the first sidelink resource failing to satisfy a resource utilization probability threshold.

In some examples of the method, apparatuses, and non-transitory computer-readable medium described herein, the selecting may include operations, features, means, or instructions for selecting the second sidelink resource that differs from the first sidelink resource based on a resource utilization probability of the resource utilization probability vector for the first sidelink resource satisfying a resource utilization probability threshold.

In some examples of the method, apparatuses, and non-transitory computer-readable medium described herein, receiving the first message may include operations, features, means, or instructions for receiving the first message indicating a number of resources being reserved and a periodicity of the reserved resources.

In some examples of the method, apparatuses, and non-transitory computer-readable medium described herein, receiving the first message may include operations, features, means, or instructions for receiving the first message indicating the reservation that identifies a time period, a time slot, a frequency band, a sub-channel, a bandwidth part, or any combination thereof.

In some examples of the method, apparatuses, and non-transitory computer-readable medium described herein, receiving the first message may include operations, features, means, or instructions for receiving sidelink control information indicating the resource utilization probability vector for the one or more remaining sidelink resources.

Some examples of the method, apparatuses, and non-transitory computer-readable medium described herein may further include operations, features, means, or instructions for receiving, from a base station, a configuration message indicating a resource utilization probability threshold.

Some examples of the method, apparatuses, and non-transitory computer-readable medium described herein may further include operations, features, means, or instructions for selecting, from a set of multiple resource utilization probability thresholds, a resource utilization probability threshold, where the selection may be random or according to a threshold selection rule.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects and embodiments are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, embodiments and/or uses may come about via integrated chip embodiments and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range in spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also necessarily include additional components and features for implementation and practice of claimed and described embodiments. For example, transmission and reception of wireless signals necessarily includes a number of components for analog and digital purposes (e.g., hardware components including antenna, radio frequency (RF)-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

### BRIEF DESCRIPTION OF THE DRAWINGS

FIGs. 1 through 3 illustrate examples of wireless communications systems that support sidelink resource protection for first transmissions in aperiodic traffic in accordance with aspects of the present disclosure.
FIG. 4 illustrates an example of a resource window that supports sidelink resource protection for first transmissions in aperiodic traffic in accordance with aspects of the present disclosure.
FIG. 5 illustrates an example of a process flow that supports sidelink resource protection for first transmissions in aperiodic traffic in accordance with aspects of the present disclosure.
FIGs. 6 and 7 show block diagrams of devices that support sidelink resource protection for first transmissions in aperiodic traffic in accordance with aspects of the present disclosure.
FIG. 8 shows a block diagram of a communications manager that supports sidelink resource protection for first transmissions in aperiodic traffic in accordance with aspects of the present disclosure.
FIG. 9 shows a diagram of a system including a device that supports sidelink resource protection for first transmissions in aperiodic traffic in accordance with aspects of the present disclosure.
FIGs. 10 through 15 show flowcharts illustrating methods that support sidelink resource protection for first transmissions in aperiodic traffic in accordance with aspects of the present disclosure.

### DETAILED DESCRIPTION

Some wireless communications systems may support sidelink communications, which may enable direct communication between two or more user equipment (UEs). It is noted that while various examples provided herein are discussed for UE sidelink devices, such sidelink techniques may be used for any type of wireless devices that use sidelink communications. For example, a sidelink may support one or more of device-to-device (D2D) communications, vehicle-to-vehicle (V2V) communications, vehicle-to-everything (V2X) communications, and the like.

In some cases, two or more UEs communicating via sidelink communications (e.g., V2X communications) may use different traffic models. For example, the UEs may use periodic signaling, where data is communicated at a fixed time, or aperiodic signaling, where data is communicated at random times. For periodic signaling, the UEs may use semi-persistent scheduling (SPS) to reserve resources for a number of consecutive transport blocks for data communications. However, for aperiodic signaling, the UEs may randomly select resources from an available resource pool within a resource window for data communications. As such, multiple UEs may select the same resource for their corresponding first data transmissions, which may cause collisions in the selected resource.

Techniques described herein provide for protecting a UE's first (e.g., initial) data transmission from collisions and increasing the resource utilization efficiency of UEs communicating via sidelink communications. For example, a UE may utilize an SPS-type reservation for initial data transmissions in an aperiodic system. In some cases, a first UE may perform a sensing procedure during a sensing window to identify a first available sidelink resource. The first UE may select the first sidelink resource for transmitting a first message and one or more remaining sidelink resources for transmitting one or more additional messages that each differ from the first message (e.g., each message carries different data packets). In some cases, the first UE may transmit the first message in the first sidelink resource, where the first message may indicate a reservation for the one or more remaining sidelink resources and a resource utilization probability vector for the one or more remaining sidelink resources. In some examples, the first UE may reserve the one or more remaining sidelink resources such that another UE may refrain from using the same sidelink resources, thus avoiding collisions. In addition, the resource utilization probability vector may include the resource utilization probabilities corresponding to each of the remaining sidelink resources, and may indicate how much of each of the remaining sidelink resources the first UE may use for its first data transmissions.

In some examples, a second UE (e.g., in sidelink communications with the first UE) may receive the first message during the sensing window. If the resource utilization probability for the one or more remaining sidelink resources reserved by the first UE fails to satisfy (e.g., is lower than) a resource utilization probability threshold, then the second UE may select and transmit its own sidelink message during a first sidelink resource of the one or more remaining sidelink resources, disregarding the first UE's reservation. Additionally or alternatively, if the resource utilization probability of the one or more remaining sidelink resources reserved by the first UE satisfies (e.g., is greater than) the resource utilization probability threshold, then the second UE may select a second sidelink resource for transmitting the sidelink message. The second UE may transmit the sidelink message in the selected sidelink resource.

Aspects of the disclosure are initially described in the context of wireless communications systems. Aspects of the disclosure are then described in the context of resource windows and process flows. Aspects of the disclosure are further illustrated by and described with reference to apparatus diagrams, system diagrams, and flowcharts that relate to sidelink resource protection for first transmissions in aperiodic traffic.

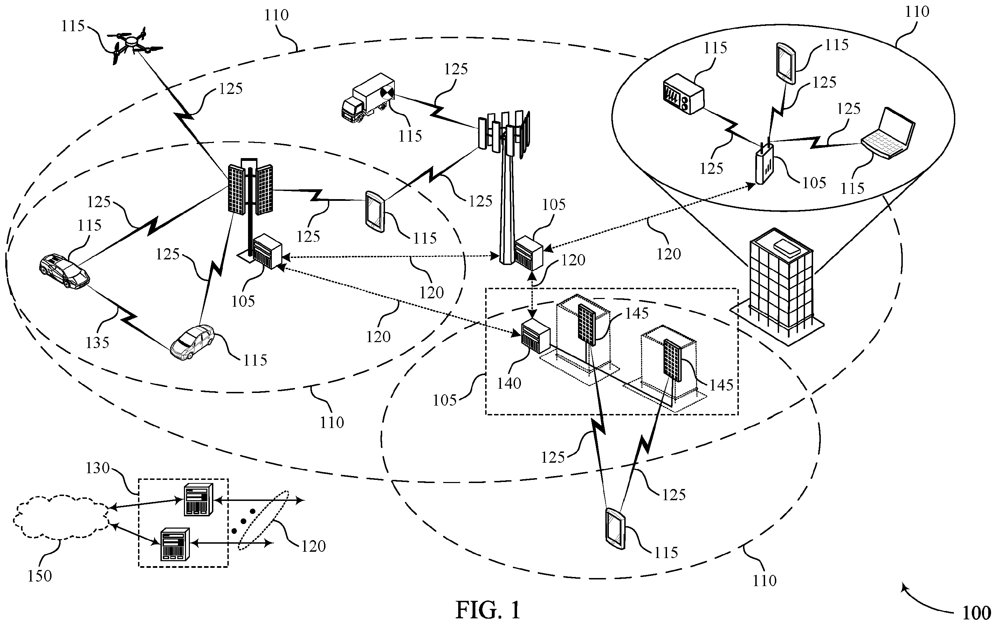

**FIG. 1** illustrates an example of a wireless communications system 100 that supports sidelink resource protection for first transmissions in aperiodic traffic in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC). The UEs 115 may be designed to support ultra-reliable, low-latency, or critical functions. Ultra-reliable communications may include private communication or group communication and may be supported by one or more services such as push-to-talk, video, or data. Support for ultra-reliable, low-latency functions may include prioritization of services, and such services may be used for public safety or general commercial applications. The terms ultra-reliable, low-latency, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, in some examples in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

Some wireless communications systems 100 may support sidelink communications, which may enable direct communication between two or more UEs 115. It is noted that while various examples provided herein are discussed for UE sidelink devices, such sidelink techniques may be used for any type of wireless devices that use sidelink communications. For example, a sidelink may support one or more of D2D communications, V2V communications, V2X communications, and the like.

In some cases, two or more UEs 115 communicating via sidelink communications (e.g., V2X communications) may use different traffic models. For example, the UEs may use periodic communications where an inter-packet arrival time is fixed (e.g., data arrives periodically), or aperiodic communications where the inter-packet arrival time is a random variable (e.g., data arrives randomly). Depending on the traffic model, the UEs 115 may apply different transmission schemes. For example, for periodic traffic, a UE 115 may use SPS resource reservations to reserve resources for a number of periodic, consecutive transport blocks for communications. The UE 115 may identify the period between the transport blocks, and the UE 115 may configure a resource reservation interval (RRI) which may define a time period between the selected resources for retransmission. In some cases, the UE 115 may use SPS resource reservations in LTE V2X communications, which may include a Mode 4 resource allocation in which the UE 115 may select the reserved resource autonomously, or in NR V2X communications, which may include a Mode 2 resource allocation in which the UE 115 may select the reserved resources via a sidelink.

In aperiodic traffic, the UE 115 may randomly select resources from an available resource pool within a resource window. For example, the UE 115 may perform random selection to select a resource from its resource window for its first data transmission after a packet arrival. However, multiple UEs may select the same resource for their corresponding first data transmissions, which may cause collisions between data packets in the selected resource. As such, the UE 115 may lack a protection mechanism for its first (e.g., initial) data transmissions in aperiodic traffic. As described herein, a first transmission or a first data transmission may refer to a first attempt at sending data in a message, rather than being a retransmission.

To protect the first data transmission for the UE 115 and to increase the resource utilization efficiency of multiple UEs in sidelink communications, the UE 115 may utilize an SPS-type reservation for initial data transmissions in aperiodic traffic. In some cases, a first UE (e.g., a UE 115) may perform a sensing procedure during a sensing window to identify a first available sidelink resource. The first UE may select the first sidelink resource for transmitting a first message and one or more remaining sidelink resources for transmitting one or more additional messages that each differ from the first message (e.g., each message carries different data packets). In some cases, the first UE may transmit the first message in the first sidelink resource, where the first message may indicate a reservation for the one or more remaining sidelink resources and a resource utilization probability vector for the one or more remaining sidelink resources. In some examples, the first UE may reserve the one or more remaining sidelink resources such that another UE 115 may refrain from using the same sidelink resources, thus avoiding or reducing the likelihood of collisions. In addition, the resource utilization probability vector may include the resource utilization probabilities corresponding to each of the remaining sidelink resources, and may indicate how much of each of the remaining sidelink resources the first UE may use for its first data transmissions.

In some examples, a second UE (e.g., in sidelink communications with the first UE) may receive the first message during the sensing window. If the resource utilization probability for the one or more remaining sidelink resources reserved by the first UE fails to satisfy (e.g., is lower than) a resource utilization probability threshold, then the second UE may select and transmit its own sidelink message during a first sidelink resource of the one or more remaining sidelink resources, disregarding the first UE's reservation. Additionally or alternatively, if the resource utilization probability of the one or more remaining sidelink resources reserved by the first UE satisfies (e.g., is greater than) the resource utilization probability threshold, then the second UE may select a second sidelink resource for transmitting the sidelink message. The second UE may transmit the sidelink message in the selected sidelink resource.

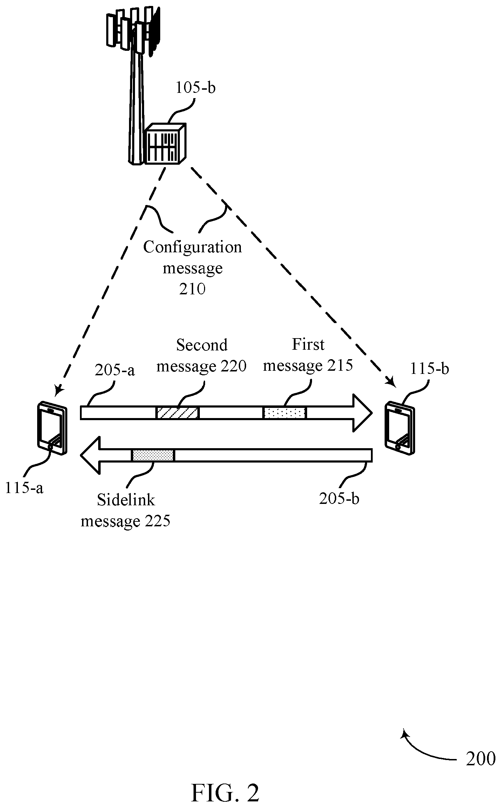

**FIG.** 2 illustrates an example of a wireless communications system 200 that supports sidelink resource protection for first transmissions in aperiodic traffic in accordance with aspects of the present disclosure. In some examples, the wireless communications system 200 may implement aspects of the wireless communications system 100 or may be implemented by aspects of the wireless communications system 100. For example, the wireless communications system 200 may include a UE 115-a, a UE 115-b, and a base station 105-a, which may be examples of corresponding devices described herein.

The UE 115-a and the UE 115-b may communicate (e.g., V2X communications) via sidelink links 205. To protect the first data transmission for the UE 115-a and to increase the resource utilization efficiency of the UEs 115, the UE 115-a may utilize an SPS-type reservation for initial data transmissions in aperiodic traffic. The UE 115-a (e.g., a first UE), the UE 115-b (e.g., a second UE), or both may receive a configuration message 210 from the base station 105-a indicating a number of sidelink resources to reserve and a periodicity for the number of sidelink resources. In addition, the configuration message 210 may indicate a resource utilization probability threshold. In some examples, the UE 115-a, the UE 115-b, or both may fail to receive the configuration message from the base station 105-a, and as such, the UE 115-a, the UE 115-b, or both may determine one or more parameters from an available parameter pool, the parameters including the number of sidelink resources, the periodicity, the resource utilization probability threshold, or any combination thereof.

The UE 115-a may perform a sensing procedure during a sensing window to identify that a first sidelink resource is available (e.g., not reserved by another UE 115). Based on the sensing procedure, the UE 115-a may select the first sidelink resource for transmitting a first message 215 and one or more remaining sidelink resources for transmitting one or more additional messages each differing from the first message (e.g., each message carries different first data transmissions). In some cases, the UE 115-a may transmit the first message 215 via a sidelink link 205-a and in the first sidelink resource, where the first message 215 may indicate a reservation for the one or more remaining sidelink resources and a resource utilization probability vector for the one or more remaining sidelink resources. Through the reservation, the UE 115-a may indicate that it may use the reserved sidelink resources for data transmissions such that those sidelink resources may be unavailable to other UEs 115. Additionally or alternatively, the UE 115-a may reserve sidelink resources for future data transmissions to avoid collisions with data transmissions from other UEs 115 in the same sidelink resources. In some cases, the resource utilization probability vector may include the resource utilization probabilities for each of the remaining sidelink resources reserved by the UE 115-a, where each resource utilization probability may indicate a percentage of a reserved sidelink resource that the UE 115-a may use. In some examples, the ability of the UE 115-b to reserve a sidelink resource may depend on the resource utilization probability vector for the one or more remaining sidelink resources.

In some cases, the first message 215 may indicate a number of sidelink resources being reserved and a periodicity of the reserved resources, where the UE 115-a may randomly select the number of sidelink resources, the periodicity, or both. Additionally or alternatively, the first message 215 may indicate the one or more parameters selected based on failing to receiving the configuration message 210 from the base station 105-a. In some examples, the UE 115-a may transmit a second message 220 via a second sidelink resource of the one or more remaining sidelink resources, where the second message 220 may indicate a reservation for one or more additional sidelink resources and a second resource utilization probability vector for the one or more additional sidelink resources. As such, the UE 115-a may reserve any number of sidelink resources within the sensing window.

In some examples, the UE 115-b (e.g., a second UE) may receive the first message 215 from the UE 115-a. If the resource utilization probability for the one or more remaining sidelink resources (e.g., indicated in the first message 215) fails to satisfy a resource utilization probability threshold, then the UE 115-b may transmit its own sidelink message 225 during a first sidelink resource of the one or more remaining sidelink resources, disregarding the reservation from the UE 115-a. That is, if the UE 115-a fails to utilize a particular amount of the first sidelink resource of the remaining sidelink resources, then the first sidelink resource may be available for the UE 115-b to reserve. Additionally or alternatively, the UE 115-b may select a second sidelink resource that is different than the first sidelink resource of the one or more remaining sidelink resources if the resource utilization probability for the first sidelink resource reserved by the UE 115-a satisfies the resource utilization probability threshold. That is, if the UE 115-a reserves a sufficient amount of the first sidelink resource, then the first sidelink resource may be unavailable to the UE 115-b. The UE 115-b may transmit the sidelink message 225 in the selected sidelink resource.

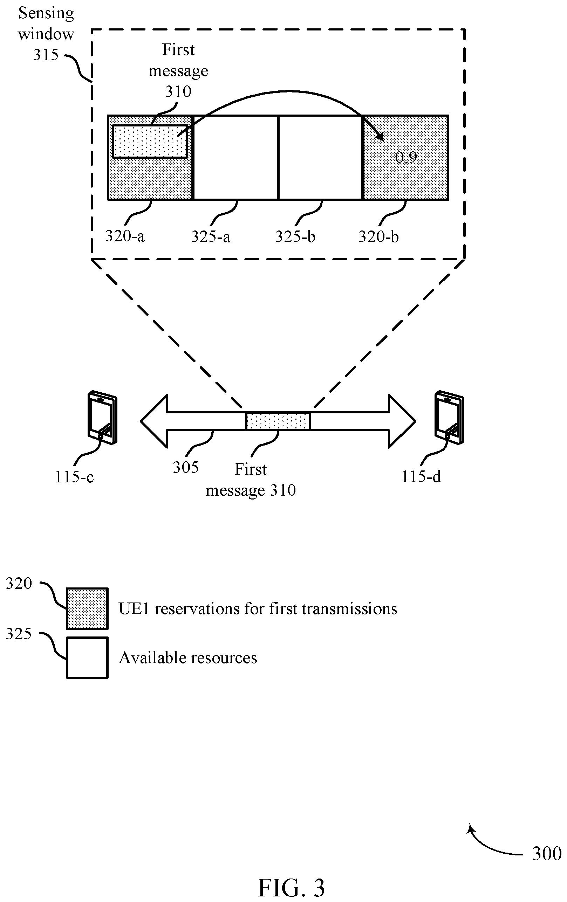

**FIG. 3** illustrates an example of a wireless communications system 300 that supports sidelink resource protection for first transmissions in aperiodic traffic in accordance with aspects of the present disclosure. In some examples, the wireless communications system 300 may implement aspects of the wireless communications systems 100 and 200 or may be implemented by aspects of the wireless communications systems 100 and 200. For example, the wireless communications system 300 may include a UE 115-c and a UE 115-d, which may be examples of corresponding devices described herein.

The UE 115-c and the UE 115-d may communicate (e.g., V2X communications) via a sidelink link 305. As described with reference to FIG. 2, the UE 115-c (e.g., a first UE) may perform a sensing procedure during a sensing window 315 to identify that a sidelink resource 320-a (e.g., a first sidelink resource) is available (e.g., not reserved by another UE 115). In some examples, the sensing window 315 may be a resource window including a number of sidelink resources, where the sidelink resources 320 may be reserved for first data transmissions by the UE 115-c and the sidelink resources 325 may be available sidelink resources.

Based on the sensing procedure, the UE 115-c may select the sidelink resource 320-a for transmitting a first message 310 via the sidelink link 305, and one or more remaining sidelink resources, such as a sidelink resource 320-b (e.g., a second sidelink resource), for transmitting one or more additional messages (e.g., each message carries different first data packets). In some cases, the UE 115-c may transmit the first message 310 in the sidelink resource 320-a to the UE 115-d (e.g., a second UE), where the first message 310 may indicate a reservation and a resource utilization probability vector for the one or more remaining sidelink resources and a resource utilization probability vector for the remaining sidelink resources. For example, the first message 310 may indicate a reservation for the sidelink resource 320-b and a corresponding resource utilization probability of 0.9 in the resource utilization probability vector. The reservation may indicate that the UE 115-c may use the sidelink resource 320-b for a future data transmission, and the resource utilization probability may indicate that the UE 115-c may utilize a percentage of the sidelink resource 320-b. For example, the resource utilization probability may be 0.9, indicating that the UE 115-c may use ninety percent of the sidelink resource 320-b.

In some examples, the UE 115-c may reserve a number *N* sidelink resources 320 with a periodicity *T* for the first transmissions of *N* potential data packets (e.g., messages). For example, the UE 115-c may reserve any number of sidelink resources 320 in addition to the sidelink resource 320-a and the sidelink resource 320-b, where each of the sidelink resources 320 may have the same periodicity (e.g., every third sidelink resource). The number N sidelink resources 320 and the periodicity *T* may be pre-configured or determined by the UE 115-c, where *N* and *T* may be randomly selected from a particular set of numbers for each. For example, the UE 115-c may receive a configuration message from a base station indicating a number of sidelink resources 320 to reserve and a periodicity for the number of sidelink resources 320, which the UE 115-c may indicate to the UE 115-d in the first message 310. In addition, the UE 115-c may receive the configuration message from the base station which may indicate the resource utilization probability threshold corresponding to the number of sidelink resources 320.

In some examples, the UE 115-c may select the sidelink resources 320 randomly among a number of available resources within the sensing window 315. For example, the UE 115-c may randomly select the sidelink resource 320-a and the sidelink resource 320-b if they are available to the UE 115-c in the sensing window 315. If there are sidelink resources 325 within the sensing window 315 that are already reserved by the UE 115-d (e.g., or any other UE 115), then the sidelink resources 325 may still be available to the UE 115-c based on their corresponding resource utilization probabilities. For example, the UE 115-d may reserve the sidelink resource 325-a with a resource utilization probability of 0.1, indicating that the UE 115-d may use ten percent of the sidelink resource 325-a. Because a large amount of the sidelink resource 325-a may still be available after it is reserved by the UE 115-d, the sidelink resource 325-a may be available to the UE 115-c.

The UE 115-c may reserve sidelink resources 320 (e.g., dedicated resources) by selecting a time period, a time slot, a frequency band, a sub-channel, a BWP, or any combination thereof, which the UE 115-c may indicate in the first message 310. Additionally or alternatively, the UE 115-c may indicate the reservation for the sidelink resources 320 in a sidelink control information (SCI) field in a data packet. In some cases, the SCI field may also store the resource utilization probability for the sidelink resource 320 that is selected.

During the transmission of each data packet (e.g., during the transmission of the first message 310 in the sidelink resource 320-a), retransmissions may be triggered based on each first data transmission. For example, the UE 115-c may receive a negative acknowledgment (NACK) message for the first message 310 from the UE 115-d, indicating that the UE 115-d did not successfully receive the first message 310. As such, the UE 115-c may transmit an additional message via an additional sidelink resource (e.g., the sidelink resource 325-a) different from the sidelink resource 320-a and the sidelink resource 320-b (e.g., a third sidelink resource), where the additional message may be a retransmission of the first message 310.

In some examples, when performing a first data transmission of a data packet (e.g., a k^{th} first data transmission), the UE 115-c may estimate the resource utilization probabilities of the remaining sidelink resources (e.g., the *N-1* sidelink resources 320 that are remaining) for the following first data transmissions of new data packets. For example, the UE 115-c may identify data available for transmission during the sidelink resource 320-b or any other remaining sidelink resource, and may estimate the resource utilization probability for the remaining sidelink resources based on identifying the data. The UE 115-c may update the resource utilization probabilities after each data transmission in a sidelink resource 320. Additionally or alternatively, when performing a k^{th} first data transmission, with *N-k* data packets remaining to transmit, the UE 115-c may indicate a resource utilization probability for the next n sidelink resources 320 for *n* potential first data transmissions, where *n* may be a number between 1 and *N-k.* In some examples, the UE 115-c may indicate the resource utilization probability for the next *n* sidelink resources 320 in the SCI field. The default value for n may be *N-k,* such that the UE 115-c may indicate the resource utilization probability for the remaining first data transmissions.

In some cases, the UE 115-c may determine whether a sidelink resource 320 is available based on whether the corresponding resource utilization probability satisfies or fails to satisfy a resource utilization probability threshold. For example, when a sidelink resource 320 that is pre-reserved is in the sensing window (e.g., resource selection window) of another UE 115 (e.g., the UE 115-d), and if the resource utilization probability corresponding to that sidelink resource 320 is lower than a resource utilization probability threshold (e.g., fails to satisfy a threshold), then the sidelink resource 320 may be treated as available and may be selected by the other UEs 115 for their data transmissions. That is, if the resource utilization probability is small, then the sidelink resource 320 may be treated as being available.

In some examples, the UE 115-c may receive, from the UE 115-d, a reservation message indicating a reservation of the sidelink resource 320-b and a second resource utilization probability (e.g., indicating the portion of the sidelink resource 320-b the UE 115-d is reserving). If the second resource utilization probability fails to satisfy the resource utilization probability threshold, then the UE 115-c may indicate its own reservation for the sidelink resource 320-b in the first message 310. That is, if the UE 115-d reserves a small enough amount of the sidelink resource 320-b, indicating that the second resource utilization probability fails to satisfy (e.g., is lower than) the resource utilization probability threshold, then the UE 115-c may reserve the remaining space of the sidelink resource 320-b to transmit the second message.

Additionally or alternatively, the UE 115-d may select the sidelink resource 320-b for a data transmission based on the resource utilization probability for the sidelink resource 320-b indicated by the UE 115-c in the first message 310 failing to satisfy the resource utilization probability threshold. That is, if the UE 115-c reserves a small enough portion of the sidelink resource 320-b, then the UE 115-d may reserve the remaining portion of the sidelink resource 320-b. In some cases, the UE 115-d may select a different sidelink resource 320 for the data transmission based on the resource utilization probability for the sidelink resource 320-b indicated by the UE 115-c in the first message 310 satisfying the resource utilization probability threshold. That is, if the UE 115-c reserves a large enough portion of the sidelink resource 320-b, then the UE 115-d may reserve a different sidelink resource 320 (e.g., because the sidelink resource 320-b may be unavailable to the UE 115-d). In some examples, if a resource utilization probability threshold is not indicated to or determined by the UE 115-c or the UE 115-d, then the sidelink resources 320 that are reserved may be treated as unavailable, and as such UEs 115 may refrain from selecting them. For example, if the UE 115-c transmits the first message 310 indicating the reservation for the sidelink resource 320-b but refrains from including the resource utilization probability threshold for the sidelink resource 320-b in the first message 310, then the UE 115-d may treat the sidelink resource 320-b as unavailable regardless of the amount of the sidelink resource 320-b the UE 115-c actually reserved.

In some cases, a resource utilization probability threshold may be pre-configured (e.g., by a base station) or determined by the UE 115-c, the UE 115-d, or both. For example, the UE 115-c may determine a resource utilization probability threshold and transmit SCI (e.g., in the first message 310) indicating the resource utilization probability threshold for the sidelink resource 320-d to the UE 115-d. In some examples, the UE 115-c may determine the resource utilization probability threshold based on a priority of a pending data packet to be transmitted, a measured channel busy ratio (CBR), a packet delay budget (PDB), or other factors.

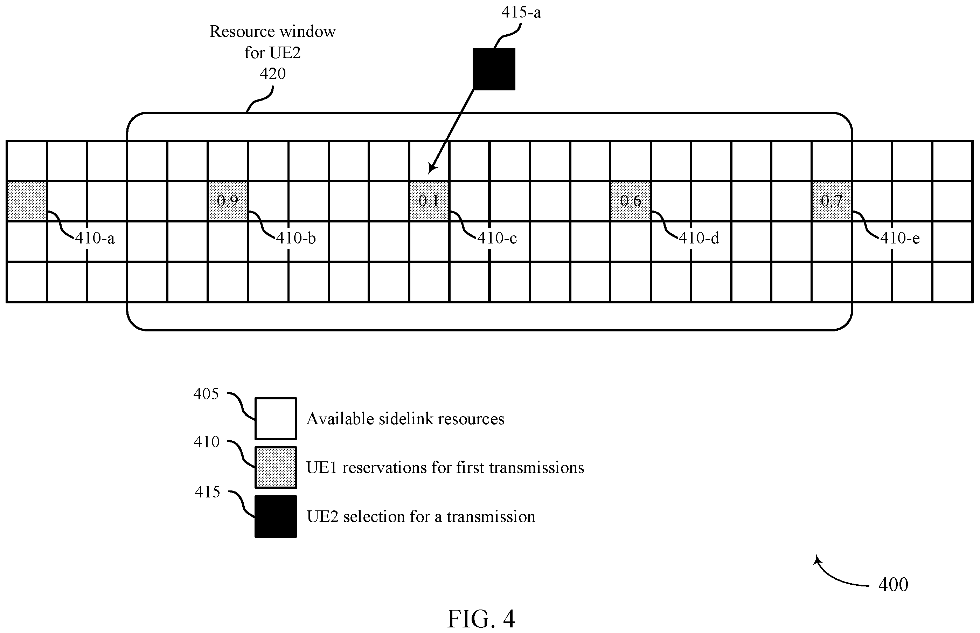

**FIG. 4** illustrates an example of a resource window 400 that supports sidelink resource protection for first transmissions in aperiodic traffic in accordance with aspects of the present disclosure. In some examples, the resource window 400 may implement aspects of the wireless communications systems 100 and 200 or may be implemented by aspects of the wireless communications systems 100 and 200.

Two or more UEs may communicate via sidelink communications and may experience aperiodic traffic where data is transmitted at random times. To prevent data collisions in shared sidelink resources, the UEs may use SPS-type reservations to reserve sidelink resources for multiple first data transmissions. A first UE (e.g., UE1) may perform a sensing procedure during a sensing window (e.g., the resource window 400), in which the UE may identify one or more sidelink resources 405 of a set of sidelink resources that are available for data transmissions. In some cases, the first UE may reserve a number of N sidelink resources 410 with a periodicity *T*. For example, the first UE may reserve a sidelink resource 410-a, a sidelink resource 410-b, a sidelink resource 410-c, a sidelink resource 410-d, and a sidelink resource 410-e, where the sidelink resources 410 include every fifth sidelink resource (e.g., every 5th symbol, slot, subframe, etc.) in the set of sidelink resources (e.g., the periodicity).

In some cases, other UEs may be aware that the first UE reserved the sidelink resources 410, and as such, the other UEs may refrain from selecting the sidelink resources 410 reserved by the first UE, which may protect the first UE's future first data transmissions. For example, the other UEs may be aware that the first UE reserved the sidelink resource 410-c, and as such, first data packet transmitted in the sidelink resource 410-c may be protected from collisions or other inefficiencies.

In some examples, the first UE may select the sidelink resource 410-a for transmitting a first message, and one or more remaining sidelink resources for transmitting one or more additional messages that each differ from the first message. The first UE may transmit the first message, to a second UE, using the sidelink resource 410-a that is selected, where the first message may indicate a resource utilization probability vector for the one or more remaining sidelink resources, where the resource utilization probability vector may include one or more resource utilization probabilities corresponding to the one or more remaining sidelink resources. For example, the first message may indicate a resource utilization probability of 0.9 (e.g., 90%) for the sidelink resource 410-b, a resource utilization probability of 0.1 (e.g., 10%) for the sidelink resource 410-c, a resource utilization probability of 0.6 (e.g., 60%) for the sidelink resource 410-d, and a resource utilization probability of 0.7 (e.g., 70%) for the sidelink resource 410-e. As such, the resource utilization probability vector may include the resource utilization probabilities for the sidelink resources 410 (e.g., [0.9, 0.1, 0.6, 0.7]), and the resource utilization probability vector may be indicated in the first message transmitted in the sidelink resource 410-a.

In some examples, the first UE may use the sidelink resources 405 between the sidelink resources 410 for retransmissions of the first data transmissions transmitted in the sidelink resources 410. For example, the first UE may transmit a first data packet using the sidelink resource 410-b and a second data packet that is different from the first data packet using the sidelink resource 410-c, and the first UE may retransmit the first data packet using the sidelink resources 405 between the sidelink resource 410-b and the sidelink resource 410-c if the first transmission of the first data packet is unsuccessfully received (e.g., by the second UE).

In some cases, the first UE may estimate the resource utilization probabilities of the sidelink resources 410 (e.g., the following *k*(0 ≤ *k* ≤ *N -* 1) sidelink resources) that the first UE may reserve via the first message transmitted in the sidelink resource 410-a. For example, the first UE may identify data that may be available to transmit during the one or more remaining sidelink resources following the sidelink resource 410-a. Based on identifying the data, the first UE may estimate the resource utilization probabilities of the remaining sidelink resources, which may each be included in the resource utilization probability vector. If the resource utilization probability of a sidelink resource 410 reserved by the first UE is smaller than a resource utilization probability threshold (e.g., if the resource utilization probability fails to satisfy the resource utilization probability threshold, then other UEs may treat the sidelink resource 410 as available and may reserve it for future first data transmissions. In some examples, if the resource utilization probability is larger than the resource utilization probability threshold (e.g., if the resource utilization probability satisfies the resource utilization probability threshold), then the other UEs may treat the sidelink resource 410 as unavailable, and may refrain from reserving it for future first data transmissions. In some examples, the resource utilization probability threshold may be configured (e.g., by a base station) and indicated to the first UE, a second UE, or both. In some cases, the first UE may select the resource utilization probability threshold from multiple resource utilization probability thresholds. For example, the first UE may randomly select the resource utilization probability threshold or may select the resource utilization probability threshold according to a threshold selection rule.

In some examples, a second UE (e.g., or any other UE) may have a resource window 420 for selecting and reserving the sidelink resources 405, which may overlap with the resource window 400 for the first UE. As described herein, the second UE (e.g., UE2) may refrain from selecting and reserving the sidelink resources 405 that may be reserved by the first UE and that have a resource utilization probability greater than 0.6. In addition, the second UE may preempt a sidelink resource 410 that may be reserved by the first UE for a first data transmission and retransmissions of the data if the resource utilization probability is less than 0.6.

As described herein, the resource utilization probability vector (e.g., [0.9, 0.1, 0.6, 0.7]) may include the resource utilization probabilities corresponding to the reservations from the first UE for the sidelink resource 410-b, the sidelink resource 410-c, the sidelink resource 410-d, and the sidelink resource 410-e. For example, the resource utilization probability for the sidelink resource 410-b may be 0.9, indicating that the first UE may reserve and utilize ninety percent of the sidelink resource 410-b. This resource utilization probability may be larger than (e.g., may satisfy) the resource utilization probability threshold, and as such the second UE may refrain from reserving the sidelink resource 410-b as it may be largely unavailable. Additionally or alternatively, the resource utilization probability for the sidelink resource 410-c may be 0.1, indicating that the first UE may reserve and utilize ten percent of the sidelink resource 410-c. This resource utilization probability may be smaller than (e.g., may fail to satisfy) the resource utilization probability threshold, and as such the second UE may reserve the sidelink resource 410-c as it may be available. For example, the second UE may reserve the sidelink resource 415-a for a first data transmission, which may be the same as the sidelink resource 410-c.

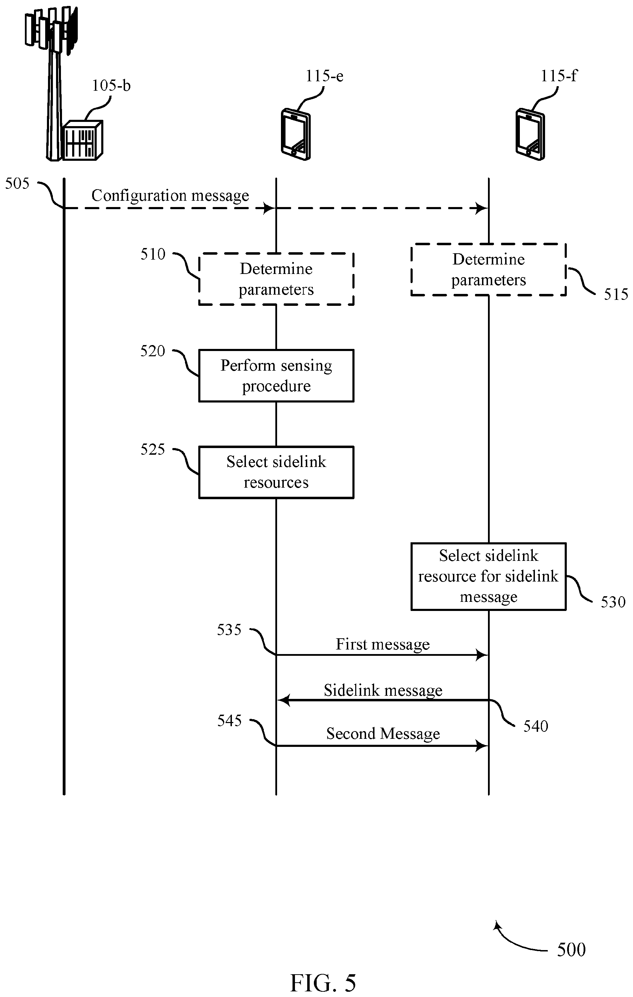

**FIG. 5** illustrates an example of a process flow 500 that supports sidelink resource protection for first transmissions in aperiodic traffic in accordance with aspects of the present disclosure. The process flow 500 may implement aspects of wireless communications systems 100 and 200, or may be implemented by aspects of the wireless communications system 100 and 200. For example, the process flow 500 may illustrate operations between a base station 105-b, a UE 115-e, and a UE 115-f, which may be examples of corresponding devices described herein. In the following description of the process flow 500, the operations between the base station 105-b, the UE 115-e, and the UE 115-f may be transmitted in a different order than the example order shown, or the operations performed by the base station 105-b, the UE 115-e, and the UE 115-f may be performed in different orders or at different times. Some operations may also be omitted from the process flow 500, and other operations may be added to the process flow 500.

At 505, the UE 115-e (e.g., a first UE), the UE 115-f (e.g., a second UE), or both may receive, from the base station 105-b, a configuration message indicating a number of sidelink resources to reserve and a periodicity for the number of sidelink resources. In some examples, the configuration may indicate a resource utilization probability threshold, which the UEs 115 may use to determine if a sidelink resource is available for reservation.

At 510 and 515, the UE 115-e, the UE 115-f, or both may determine one or more parameters from an available parameter pool based on failing to receive the configuration message from the base station 105-b. The parameters may include the number of sidelink resources to reserve, the periodicity for the number of sidelink resources, the resource utilization probability threshold, or any combination thereof.

At 520, the UE 115-e may perform a sensing procedure during a sensing window to identify that a first sidelink resource is available. For example, the sensing window may include a number of sidelink resources which the UE 115-e may reserve for first data transmissions.

At 525, the UE 115-e may select, based on the sensing procedure, the first sidelink resource for transmitting a first message and one or more remaining sidelink resources for transmitting one or more additional messages that each differ from the first message. For example, the UE 115-e may select (e.g., reserve) a second sidelink resource for transmitting a second message that is a packet that has not been previously transmitted. The remaining one or more additional messages may also be new data transmissions, rather than retransmissions of a previously transmitted packet that was not successfully received by UE 115-f.

At 530, the UE 115-f may select a first sidelink resource of the one or more remaining sidelink resources or a second sidelink resource for transmitting a sidelink message to the UE 115-e based on the resource utilization probability vector. For example, the UE 115-f may select the first sidelink resource if the corresponding resource utilization probability fails to satisfy a resource utilization probability threshold, and the UE 115-f may select the second sidelink resource if the resource utilization probability for the first sidelink resource satisfies the resource utilization probability threshold.

At 535, the UE 115-e may transmit, via the first sidelink resource and to the UE 115-f, the first message indicating a reservation for the one or more remaining sidelink resources and a resource utilization probability vector for the one or more remaining sidelink resources. In some examples, the first message may be an transmission of a new data packet that has not been previously transmitted by UE 115-a to UE 115-f. In some cases, the reservation may indicate that the UE 115-e may use the one or more remaining sidelink resources for future first data transmissions of different data packets. In addition, the resource utilization probability vector may include the resource utilization probabilities for each of the one or more remaining sidelink resources, which may indicate a percentage of a remaining sidelink resource the UE 115-e is reserving. In some examples, the resource utilization probability vector may include a single resource utilization probability.

At 540, the UE 115-f may transmit, to the UE 115-e, the sidelink message in the selected first sidelink resource or the selected second sidelink resource based on the resource utilization probability for the first sidelink resource satisfying or failing to satisfy a resource utilization probability threshold. For example, the UE 115-f may transmit the sidelink message in the same sidelink resource as the first message (e.g., fully or partially overlapping with the first message in same sidelink resource) or in a different sidelink resource from that of the first message to avoid a conflict with the first message.

At 545, the UE 115-e may transmit, to the UE 115-f, a second message via the second sidelink resource of the one or more remaining sidelink resources, the second message including a reservation for one or more additional sidelink resources and a second resource utilization probability vector for the one or more additional sidelink resources. That is, the UE 115-e may reserve any number of sidelink resources in the sensing window for transmitting different data packets.

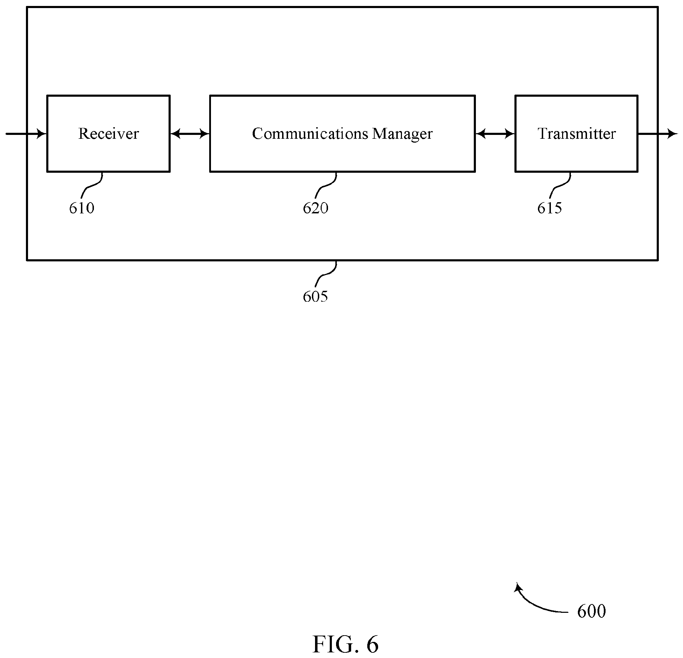

**FIG. 6** shows a block diagram 600 of a device 605 that supports sidelink resource protection for first transmissions in aperiodic traffic in accordance with aspects of the present disclosure. The device 605 may be an example of aspects of a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to sidelink resource protection for first transmissions in aperiodic traffic). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to sidelink resource protection for first transmissions in aperiodic traffic). In some examples, the transmitter 615 may be co-located with a receiver 610 in a transceiver module. The transmitter 615 may utilize a single antenna or a set of multiple antennas.

The communications manager 620, the receiver 610, the transmitter 615, or various combinations thereof or various components thereof may be examples of means for performing various aspects of sidelink resource protection for first transmissions in aperiodic traffic as described herein. For example, the communications manager 620, the receiver 610, the transmitter 615, or various combinations or components thereof may support a method for performing one or more of the functions described herein.

In some examples, the communications manager 620, the receiver 610, the transmitter 615, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 620, the receiver 610, the transmitter 615, or various combinations or components thereof may be implemented in code (e.g., as communications management software or firmware) executed by a processor. If implemented in code executed by a processor, the functions of the communications manager 620, the receiver 610, the transmitter 615, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 620 may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communication at a first UE in accordance with examples as disclosed herein. For example, the communications manager 620 may be configured as or otherwise support a means for performing a sensing procedure during a sensing window to identify that a first sidelink resource is available. The communications manager 620 may be configured as or otherwise support a means for selecting, based on the sensing procedure, the first sidelink resource for transmitting a first message and one or more remaining sidelink resources for transmitting one or more additional messages that each differ from the first message. The communications manager 620 may be configured as or otherwise support a means for transmitting, via the first sidelink resource, the first message indicating a reservation for the one or more remaining sidelink resources and a resource utilization probability vector for the one or more remaining sidelink resources.

Additionally or alternatively, the communications manager 620 may support wireless communication at a second UE in accordance with examples as disclosed herein. For example, the communications manager 620 may be configured as or otherwise support a means for receiving, during a sensing window, a first message indicating a reservation for one or more remaining sidelink resources and a resource utilization probability vector for the one or more remaining sidelink resources. The communications manager 620 may be configured as or otherwise support a means for selecting a first sidelink resource of the one or more remaining sidelink resources or a second sidelink resource for transmitting a sidelink message based on the resource utilization probability vector. The communications manager 620 may be configured as or otherwise support a means for transmitting the sidelink message in the selected sidelink resource.

By including or configuring the communications manager 620 in accordance with examples as described herein, the device 605 (e.g., a processor controlling or otherwise coupled with the receiver 610, the transmitter 615, the communications manager 620, or a combination thereof) may support techniques for sidelink resource protection for first transmissions in aperiodic traffic, which may reduce collisions between data packets in the same sidelink resources and increase resource utilization efficiency of UEs communicating via sidelink communications.

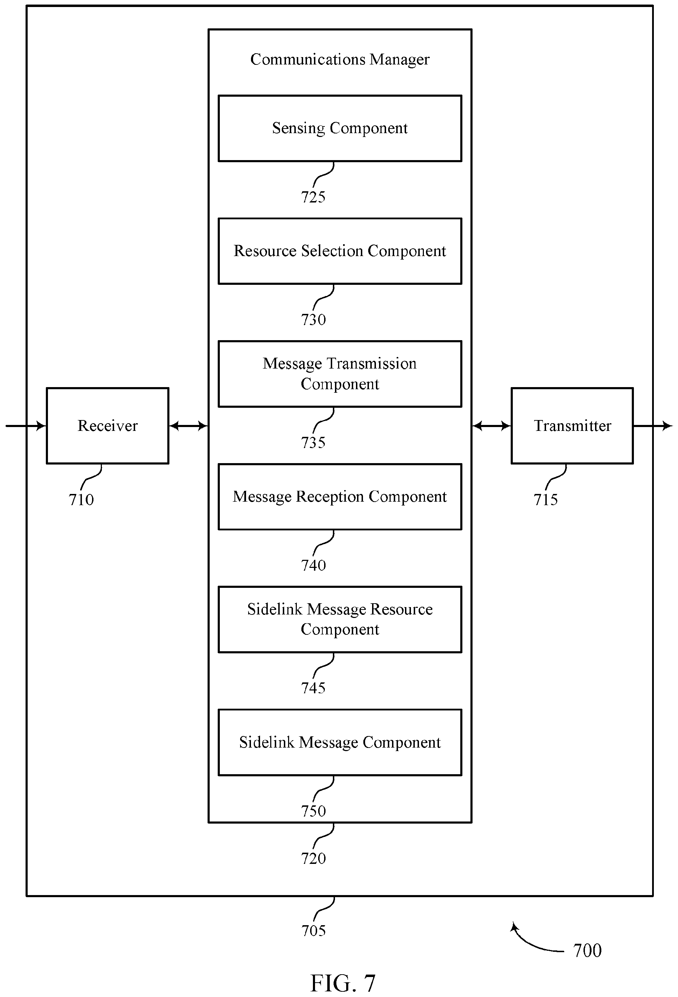

**FIG. 7** shows a block diagram 700 of a device 705 that supports sidelink resource protection for first transmissions in aperiodic traffic in accordance with aspects of the present disclosure. The device 705 may be an example of aspects of a device 605 or a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to sidelink resource protection for first transmissions in aperiodic traffic). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to sidelink resource protection for first transmissions in aperiodic traffic). In some examples, the transmitter 715 may be co-located with a receiver 710 in a transceiver module. The transmitter 715 may utilize a single antenna or a set of multiple antennas.

The device 705, or various components thereof, may be an example of means for performing various aspects of sidelink resource protection for first transmissions in aperiodic traffic as described herein. For example, the communications manager 720 may include a sensing component 725, a resource selection component 730, a message transmission component 735, a message reception component 740, a sidelink message resource component 745, a sidelink message component 750, or any combination thereof. The communications manager 720 may be an example of aspects of a communications manager 620 as described herein. In some examples, the communications manager 720, or various components thereof, may be configured to perform various operations (e.g., receiving, monitoring, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to receive information, transmit information, or perform various other operations as described herein.

The communications manager 720 may support wireless communication at a first UE in accordance with examples as disclosed herein. The sensing component 725 may be configured as or otherwise support a means for performing a sensing procedure during a sensing window to identify that a first sidelink resource is available. The resource selection component 730 may be configured as or otherwise support a means for selecting, based on the sensing procedure, the first sidelink resource for transmitting a first message and one or more remaining sidelink resources for transmitting one or more additional messages that each differ from the first message. The message transmission component 735 may be configured as or otherwise support a means for transmitting, via the first sidelink resource, the first message indicating a reservation for the one or more remaining sidelink resources and a resource utilization probability vector for the one or more remaining sidelink resources.

Additionally or alternatively, the communications manager 720 may support wireless communication at a second UE in accordance with examples as disclosed herein. The message reception component 740 may be configured as or otherwise support a means for receiving, during a sensing window, a first message indicating a reservation for one or more remaining sidelink resources and a resource utilization probability vector for the one or more remaining sidelink resources. The sidelink message resource component 745 may be configured as or otherwise support a means for selecting a first sidelink resource of the one or more remaining sidelink resources or a second sidelink resource for transmitting a sidelink message based on the resource utilization probability vector. The sidelink message component 750 may be configured as or otherwise support a means for transmitting the sidelink message in the selected sidelink resource.

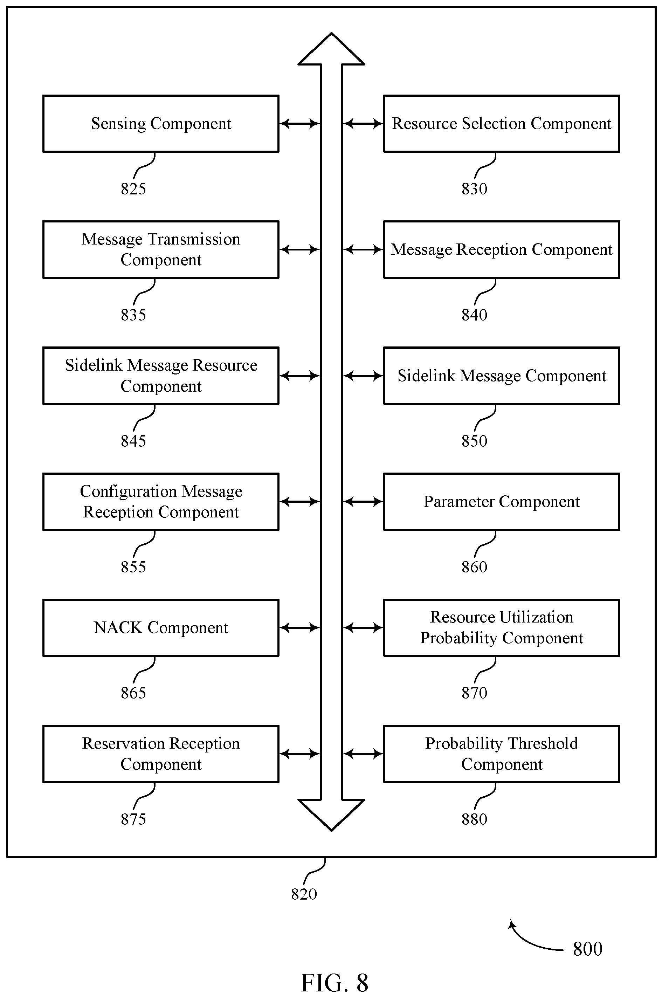

**FIG. 8** shows a block diagram 800 of a communications manager 820 that supports sidelink resource protection for first transmissions in aperiodic traffic in accordance with aspects of the present disclosure. The communications manager 820 may be an example of aspects of a communications manager 620, a communications manager 720, or both, as described herein. The communications manager 820, or various components thereof, may be an example of means for performing various aspects of sidelink resource protection for first transmissions in aperiodic traffic as described herein. For example, the communications manager 820 may include a sensing component 825, a resource selection component 830, a message transmission component 835, a message reception component 840, a sidelink message resource component 845, a sidelink message component 850, a configuration message reception component 855, a parameter component 860, a NACK component 865, a resource utilization probability component 870, a reservation reception component 875, a probability threshold component 880, or any combination thereof. Each of these components may communicate, directly or indirectly, with one another (e.g., via one or more buses).

The communications manager 820 may support wireless communication at a first UE in accordance with examples as disclosed herein. The sensing component 825 may be configured as or otherwise support a means for performing a sensing procedure during a sensing window to identify that a first sidelink resource is available. The resource selection component 830 may be configured as or otherwise support a means for selecting, based on the sensing procedure, the first sidelink resource for transmitting a first message and one or more remaining sidelink resources for transmitting one or more additional messages that each differ from the first message. The message transmission component 835 may be configured as or otherwise support a means for transmitting, via the first sidelink resource, the first message indicating a reservation for the one or more remaining sidelink resources and a resource utilization probability vector for the one or more remaining sidelink resources.

In some examples, the message transmission component 835 may be configured as or otherwise support a means for transmitting a second message via a second sidelink resource of the one or more remaining sidelink resources, the second message including a reservation for one or more additional sidelink resources and a second resource utilization probability vector for the one or more additional sidelink resources.

In some examples, the configuration message reception component 855 may be configured as or otherwise support a means for receiving, from a base station, a configuration message indicating a number of sidelink resources to reserve and a periodicity for the number of sidelink resources. In some examples, the message transmission component 835 may be configured as or otherwise support a means for transmitting, via the first sidelink resource, the first message indicating the number of sidelink resources and the periodicity.

In some examples, the parameter component 860 may be configured as or otherwise support a means for determining one or more parameters from an available parameter pool based on failing to receive a configuration message from a base station. In some examples, the message transmission component 835 may be configured as or otherwise support a means for transmitting, via the first sidelink resource, the first message indicating the one or more parameters.

In some examples, to support transmitting the first message, the message transmission component 835 may be configured as or otherwise support a means for transmitting, via the first sidelink resource, the first message indicating a number of resources being reserved and a periodicity of the reserved resources.

In some examples, the number of resources is randomly selected, the periodicity is randomly selected, or both.

In some examples, to support transmitting the first message, the message transmission component 835 may be configured as or otherwise support a means for transmitting, via the first sidelink resource, the first message indicating the reservation that identifies a time period, a time slot, a frequency band, a sub-channel, a bandwidth part, or any combination thereof.

In some examples, to support transmitting the first message, the message transmission component 835 may be configured as or otherwise support a means for transmitting sidelink control information indicating the resource utilization probability vector for the one or more remaining sidelink resources.

In some examples, the NACK component 865 may be configured as or otherwise support a means for receiving a NACK for the first message. In some examples, the message transmission component 835 may be configured as or otherwise support a means for transmitting, via an additional sidelink resource, an additional message based on the NACK, where the additional message is a retransmission of the first message.

In some examples, the resource utilization probability component 870 may be configured as or otherwise support a means for identifying data available to transmit during the one or more remaining sidelink resources. In some examples, the resource utilization probability component 870 may be configured as or otherwise support a means for estimating a resource utilization probability for each of the one or more remaining sidelink resources based on the identifying.

In some examples, the reservation reception component 875 may be configured as or otherwise support a means for receiving, from a second UE during the sensing window, a reservation message indicating a second reservation for a second sidelink resource of the one or more remaining sidelink resources and a second resource utilization probability vector. In some examples, the probability threshold component 880 may be configured as or otherwise support a means for transmitting, during the first sidelink resource, the first message indicating the reservation for the second sidelink resource of the one or more remaining sidelink resources based on a resource utilization probability indicated in the second resource utilization probability vector for the second sidelink resource failing to satisfy a resource utilization probability threshold.

In some examples, the probability threshold component 880 may be configured as or otherwise support a means for receiving, from a base station, a configuration message indicating the resource utilization probability threshold.

In some examples, the probability threshold component 880 may be configured as or otherwise support a means for selecting, from a set of multiple resource utilization probability thresholds, the resource utilization probability threshold, where the selection is rand om or according to a threshold selection rule.

Additionally or alternatively, the communications manager 820 may support wireless communication at a second UE in accordance with examples as disclosed herein. The message reception component 840 may be configured as or otherwise support a means for receiving, during a sensing window, a first message indicating a reservation for one or more remaining sidelink resources and a resource utilization probability vector for the one or more remaining sidelink resources. The sidelink message resource component 845 may be configured as or otherwise support a means for selecting a first sidelink resource of the one or more remaining sidelink resources or a second sidelink resource for transmitting a sidelink message based on the resource utilization probability vector. The sidelink message component 850 may be configured as or otherwise support a means for transmitting the sidelink message in the selected sidelink resource.

In some examples, the message reception component 840 may be configured as or otherwise support a means for receiving a second message via the first sidelink resource of the one or more remaining sidelink resources based on the first message.

In some examples, the configuration message reception component 855 may be configured as or otherwise support a means for receiving, from a base station, a configuration message indicating a number of sidelink resources to reserve and a periodicity for the number of sidelink resources. In some examples, the message reception component 840 may be configured as or otherwise support a means for receiving, via the first sidelink resource, the first message indicating the number of sidelink resources and the periodicity.

In some examples, the parameter component 860 may be configured as or otherwise support a means for determining one or more parameters from an available parameter pool based on failing to receive a configuration message from a base station. In some examples, the message reception component 840 may be configured as or otherwise support a means for receiving, via the first sidelink resource, the first message indicating the one or more parameters.

In some examples, to support selecting, the sidelink message resource component 845 may be configured as or otherwise support a means for selecting the first sidelink resource based on a resource utilization probability of the resource utilization probability vector for the first sidelink resource failing to satisfy a resource utilization probability threshold.

In some examples, to support selecting, the sidelink message resource component 845 may be configured as or otherwise support a means for selecting the second sidelink resource that differs from the first sidelink resource based on a resource utilization probability of the resource utilization probability vector for the first sidelink resource satisfying a resource utilization probability threshold.

In some examples, to support receiving the first message, the message reception component 840 may be configured as or otherwise support a means for receiving the first message indicating a number of resources being reserved and a periodicity of the reserved resources.

In some examples, to support receiving the first message, the message reception component 840 may be configured as or otherwise support a means for receiving the first message indicating the reservation that identifies a time period, a time slot, a frequency band, a sub-channel, a bandwidth part, or any combination thereof.

In some examples, to support receiving the first message, the message reception component 840 may be configured as or otherwise support a means for receiving sidelink control information indicating the resource utilization probability vector for the one or more remaining sidelink resources.

In some examples, the probability threshold component 880 may be configured as or otherwise support a means for receiving, from a base station, a configuration message indicating a resource utilization probability threshold.

In some examples, the probability threshold component 880 may be configured as or otherwise support a means for selecting, from a set of multiple resource utilization probability thresholds, a resource utilization probability threshold, where the selection is random or according to a threshold selection rule.

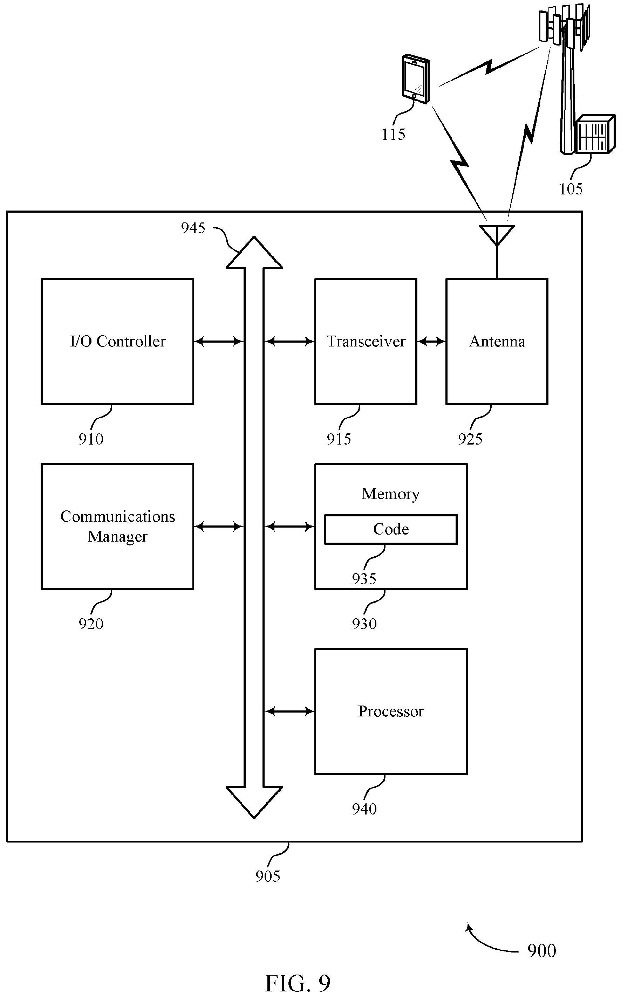

**FIG. 9** shows a diagram of a system 900 including a device 905 that supports sidelink resource protection for first transmissions in aperiodic traffic in accordance with aspects of the present disclosure. The device 905 may be an example of or include the components of a device 605, a device 705, or a UE 115 as described herein. The device 905 may communicate wirelessly with one or more base stations 105, UEs 115, or any combination thereof. The device 905 may include components for bi-directional voice and data communications including components for transmitting and receiving communications, such as a communications manager 920, an input/output (I/O) controller 910, a transceiver 915, an antenna 925, a memory 930, code 935, and a processor 940. These components may be in electronic communication or otherwise coupled (e.g., operatively, communicatively, functionally, electronically, electrically) via one or more buses (e.g., a bus 945).

The I/O controller 910 may manage input and output signals for the device 905. The I/O controller 910 may also manage peripherals not integrated into the device 905. In some cases, the I/O controller 910 may represent a physical connection or port to an external peripheral. In some cases, the I/O controller 910 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 910 may represent or interact with a modem, a keyboard, a mouse, a touchscreen, or a similar device. In some cases, the I/O controller 910 may be implemented as part of a processor, such as the processor 940. In some cases, a user may interact with the device 905 via the I/O controller 910 or via hardware components controlled by the I/O controller 910.

In some cases, the device 905 may include a single antenna 925. However, in some other cases, the device 905 may have more than one antenna 925, which may be capable of concurrently transmitting or receiving multiple wireless transmissions. The transceiver 915 may communicate bi-directionally, via the one or more antennas 925, wired, or wireless links as described herein. For example, the transceiver 915 may represent a wireless transceiver and may communicate bi-directionally with another wireless transceiver. The transceiver 915 may also include a modem to modulate the packets, to provide the modulated packets to one or more antennas 925 for transmission, and to demodulate packets received from the one or more antennas 925. The transceiver 915, or the transceiver 915 and one or more antennas 925, may be an example of a transmitter 615, a transmitter 715, a receiver 610, a receiver 710, or any combination thereof or component thereof, as described herein.

The memory 930 may include random access memory (RAM) and read-only memory (ROM). The memory 930 may store computer-readable, computer-executable code 935 including instructions that, when executed by the processor 940, cause the device 905 to perform various functions described herein. The code 935 may be stored in a non-transitory computer-readable medium such as system memory or another type of memory. In some cases, the code 935 may not be directly executable by the processor 940 but may cause a computer (e.g., when compiled and executed) to perform functions described herein. In some cases, the memory 930 may contain, among other things, a basic I/O system (BIOS) which may control basic hardware or software operation such as the interaction with peripheral components or devices.

The processor 940 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In some other cases, a memory controller may be integrated into the processor 940. The processor 940 may be configured to execute computer-readable instructions stored in a memory (e.g., the memory 930) to cause the device 905 to perform various functions (e.g., functions or tasks supporting sidelink resource protection for first transmissions in aperiodic traffic). For example, the device 905 or a component of the device 905 may include a processor 940 and memory 930 coupled with the processor 940, the processor 940 and memory 930 configured to perform various functions described herein.

The communications manager 920 may support wireless communication at a first UE in accordance with examples as disclosed herein. For example, the communications manager 920 may be configured as or otherwise support a means for performing a sensing procedure during a sensing window to identify that a first sidelink resource is available. The communications manager 920 may be configured as or otherwise support a means for selecting, based on the sensing procedure, the first sidelink resource for transmitting a first message and one or more remaining sidelink resources for transmitting one or more additional messages that each differ from the first message. The communications manager 920 may be configured as or otherwise support a means for transmitting, via the first sidelink resource, the first message indicating a reservation for the one or more remaining sidelink resources and a resource utilization probability vector for the one or more remaining sidelink resources.

Additionally or alternatively, the communications manager 920 may support wireless communication at a second UE in accordance with examples as disclosed herein. For example, the communications manager 920 may be configured as or otherwise support a means for receiving, during a sensing window, a first message indicating a reservation for one or more remaining sidelink resources and a resource utilization probability vector for the one or more remaining sidelink resources. The communications manager 920 may be configured as or otherwise support a means for selecting a first sidelink resource of the one or more remaining sidelink resources or a second sidelink resource for transmitting a sidelink message based on the resource utilization probability vector. The communications manager 920 may be configured as or otherwise support a means for transmitting the sidelink message in the selected sidelink resource.

By including or configuring the communications manager 920 in accordance with examples as described herein, the device 905 may support techniques for sidelink resource protection for first transmissions in aperiodic traffic, which may reduce collisions between data packets in the same sidelink resources and increase resource utilization efficiency of UEs communicating via sidelink communications.

In some examples, the communications manager 920 may be configured to perform various operations (e.g., receiving, monitoring, transmitting) using or otherwise in cooperation with the transceiver 915, the one or more antennas 925, or any combination thereof. Although the communications manager 920 is illustrated as a separate component, in some examples, one or more functions described with reference to the communications manager 920 may be supported by or performed by the processor 940, the memory 930, the code 935, or any combination thereof. For example, the code 935 may include instructions executable by the processor 940 to cause the device 905 to perform various aspects of sidelink resource protection for first transmissions in aperiodic traffic as described herein, or the processor 940 and the memory 930 may be otherwise configured to perform or support such operations.

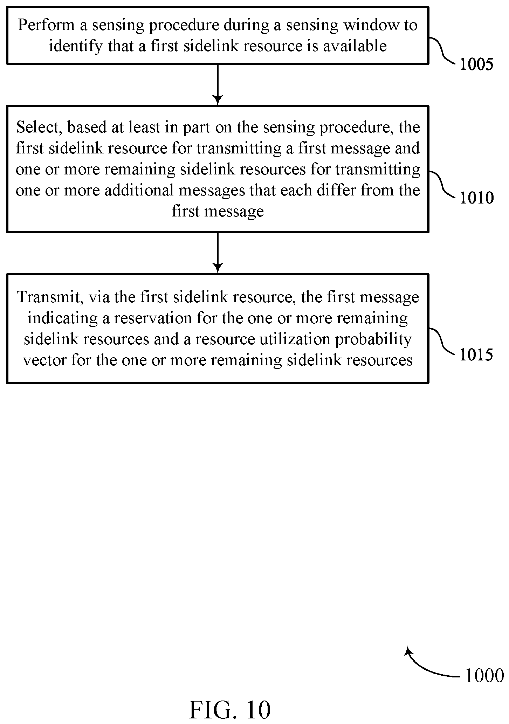

**FIG. 10** shows a flowchart illustrating a method 1000 that supports sidelink resource protection for first transmissions in aperiodic traffic in accordance with aspects of the present disclosure. The operations of the method 1000 may be implemented by a UE or its components as described herein. For example, the operations of the method 1000 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1005, the method may include performing a sensing procedure during a sensing window to identify that a first sidelink resource is available. The operations of 1005 may be performed in accordance with examples as disclosed herein. In some examples, aspects of the operations of 1005 may be performed by a sensing component 825 as described with reference to FIG. 8.

At 1010, the method may include selecting, based on the sensing procedure, the first sidelink resource for transmitting a first message and one or more remaining sidelink resources for transmitting one or more additional messages that each differ from the first message. The operations of 1010 may be performed in accordance with examples as disclosed herein. In some examples, aspects of the operations of 1010 may be performed by a resource selection component 830 as described with reference to FIG. 8.

At 1015, the method may include transmitting, via the first sidelink resource, the first message indicating a reservation for the one or more remaining sidelink resources and a resource utilization probability vector for the one or more remaining sidelink resources . The operations of 1015 may be performed in accordance with examples as disclosed herein. In some examples, aspects of the operations of 1015 may be performed by a message transmission component 835 as described with reference to FIG. 8.

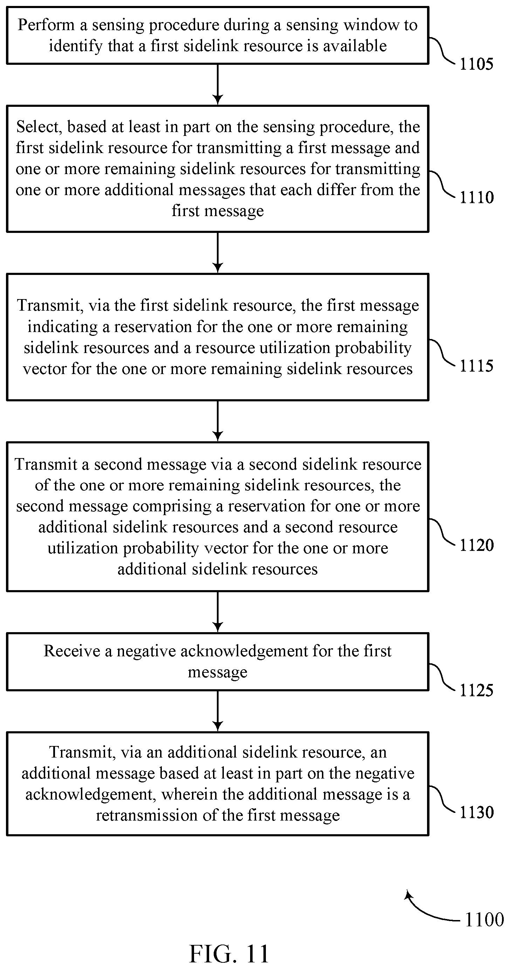

**FIG. 11** shows a flowchart illustrating a method 1100 that supports sidelink resource protection for first transmissions in aperiodic traffic in accordance with aspects of the present disclosure. The operations of the method 1100 may be implemented by a UE or its components as described herein. For example, the operations of the method 1100 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1105, the method may include performing a sensing procedure during a sensing window to identify that a first sidelink resource is available. The operations of 1105 may be performed in accordance with examples as disclosed herein. In some examples, aspects of the operations of 1105 may be performed by a sensing component 825 as described with reference to FIG. 8.

At 1110, the method may include selecting, based on the sensing procedure, the first sidelink resource for transmitting a first message and one or more remaining sidelink resources for transmitting one or more additional messages that each differ from the first message. The operations of 1110 may be performed in accordance with examples as disclosed herein. In some examples, aspects of the operations of 1110 may be performed by a resource selection component 830 as described with reference to FIG. 8.

At 1115, the method may include transmitting, via the first sidelink resource, the first message indicating a reservation for the one or more remaining sidelink resources and a resource utilization probability vector for the one or more remaining sidelink resources . The operations of 1115 may be performed in accordance with examples as disclosed herein. In some examples, aspects of the operations of 1115 may be performed by a message transmission component 835 as described with reference to FIG. 8.

At 1120, the method may include transmitting a second message via a second sidelink resource of the one or more remaining sidelink resources, the second message including a reservation for one or more additional sidelink resources and a second resource utilization probability vector for the one or more additional sidelink resources. The operations of 1120 may be performed in accordance with examples as disclosed herein. In some examples, aspects of the operations of 1120 may be performed by a message transmission component 835 as described with reference to FIG. 8.

At 1125, the method may include receiving a NACK for the first message. The operations of 1125 may be performed in accordance with examples as disclosed herein. In some examples, aspects of the operations of 1125 may be performed by a NACK component 865 as described with reference to FIG. 8.

At 1130, the method may include transmitting, via an additional sidelink resource, an additional message based on the NACK, where the additional message is a retransmission of the first message. The operations of 1130 may be performed in accordance with examples as disclosed herein. In some examples, aspects of the operations of 1130 may be performed by a message transmission component 835 as described with reference to FIG. 8.

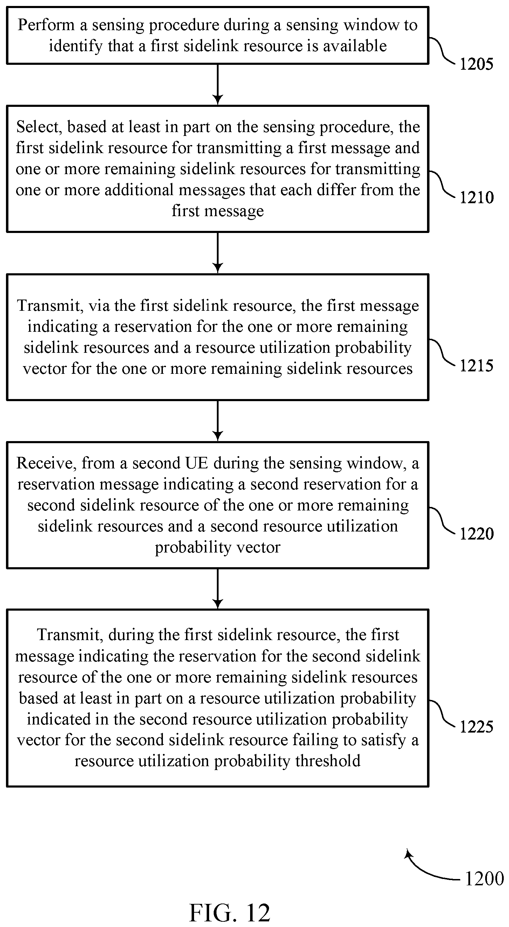

**FIG. 12** shows a flowchart illustrating a method 1200 that supports sidelink resource protection for first transmissions in aperiodic traffic in accordance with aspects of the present disclosure. The operations of the method 1200 may be implemented by a UE or its components as described herein. For example, the operations of the method 1200 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1205, the method may include performing a sensing procedure during a sensing window to identify that a first sidelink resource is available. The operations of 1205 may be performed in accordance with examples as disclosed herein. In some examples, aspects of the operations of 1205 may be performed by a sensing component 825 as described with reference to FIG. 8.

At 1210, the method may include selecting, based on the sensing procedure, the first sidelink resource for transmitting a first message and one or more remaining sidelink resources for transmitting one or more additional messages that each differ from the first message. The operations of 1210 may be performed in accordance with examples as disclosed herein. In some examples, aspects of the operations of 1210 may be performed by a resource selection component 830 as described with reference to FIG. 8.

At 1215, the method may include transmitting, via the first sidelink resource, the first message indicating a reservation for the one or more remaining sidelink resources and a resource utilization probability vector for the one or more remaining sidelink resources . The operations of 1215 may be performed in accordance with examples as disclosed herein. In some examples, aspects of the operations of 1215 may be performed by a message transmission component 835 as described with reference to FIG. 8.

At 1220, the method may include receiving, from a second UE during the sensing window, a reservation message indicating a second reservation for a second sidelink resource of the one or more remaining sidelink resources and a second resource utilization probability vector. The operations of 1220 may be performed in accordance with examples as disclosed herein. In some examples, aspects of the operations of 1220 may be performed by a reservation reception component 875 as described with reference to FIG. 8.

At 1225, the method may include transmitting, during the first sidelink resource, the first message indicating the reservation for the second sidelink resource of the one or more remaining sidelink resources based on a resource utilization probability indicated in the second resource utilization probability vector for the second sidelink resource failing to satisfy a resource utilization probability threshold. The operations of 1225 may be performed in accordance with examples as disclosed herein. In some examples, aspects of the operations of 1225 may be performed by a probability threshold component 880 as described with reference to FIG. 8.

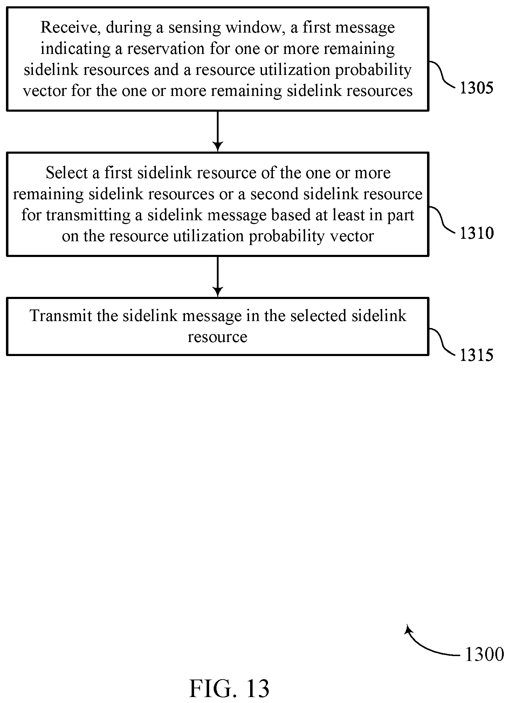

**FIG. 13** shows a flowchart illustrating a method 1300 that supports sidelink resource protection for first transmissions in aperiodic traffic in accordance with aspects of the present disclosure. The operations of the method 1300 may be implemented by a UE or its components as described herein. For example, the operations of the method 1300 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1305, the method may include receiving, during a sensing window, a first message indicating a reservation for one or more remaining sidelink resources and a resource utilization probability vector for the one or more remaining sidelink resources. The operations of 1305 may be performed in accordance with examples as disclosed herein. In some examples, aspects of the operations of 1305 may be performed by a message reception component 840 as described with reference to FIG. 8.

At 1310, the method may include selecting a first sidelink resource of the one or more remaining sidelink resources or a second sidelink resource for transmitting a sidelink message based on the resource utilization probability vector. The operations of 1310 may be performed in accordance with examples as disclosed herein. In some examples, aspects of the operations of 1310 may be performed by a sidelink message resource component 845 as described with reference to FIG. 8.

At 1315, the method may include transmitting the sidelink message in the selected sidelink resource. The operations of 1315 may be performed in accordance with examples as disclosed herein. In some examples, aspects of the operations of 1315 may be performed by a sidelink message component 850 as described with reference to FIG. 8.

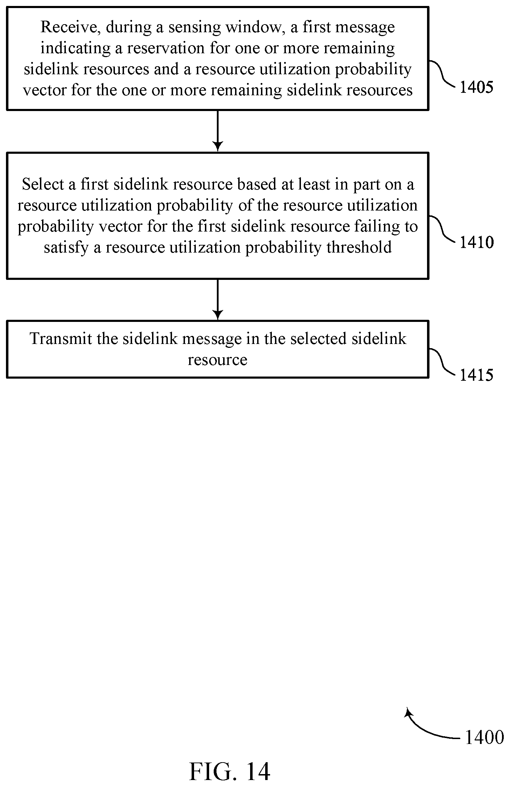

**FIG. 14** shows a flowchart illustrating a method 1400 that supports sidelink resource protection for first transmissions in aperiodic traffic in accordance with aspects of the present disclosure. The operations of the method 1400 may be implemented by a UE or its components as described herein. For example, the operations of the method 1400 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1405, the method may include receiving, during a sensing window, a first message indicating a reservation for one or more remaining sidelink resources and a resource utilization probability vector for the one or more remaining sidelink resources. The operations of 1405 may be performed in accordance with examples as disclosed herein. In some examples, aspects of the operations of 1405 may be performed by a message reception component 840 as described with reference to FIG. 8.

At 1410, the method may include selecting a first sidelink resource of the one or more remaining sidelink resources or a second sidelink resource for transmitting a sidelink message based on the resource utilization probability vector. The operations of 1410 may be performed in accordance with examples as disclosed herein. In some examples, aspects of the operations of 1410 may be performed by a sidelink message resource component 845 as described with reference to FIG. 8.

At 1415, the method may include selecting a first sidelink resource based on a resource utilization probability of the resource utilization probability vector for the first sidelink resource failing to satisfy a resource utilization probability threshold. The operations of 1415 may be performed in accordance with examples as disclosed herein. In some examples, aspects of the operations of 1415 may be performed by a sidelink message resource component 845 as described with reference to FIG. 8.

At 1420, the method may include transmitting the sidelink message in the selected sidelink resource. The operations of 1420 may be performed in accordance with examples as disclosed herein. In some examples, aspects of the operations of 1420 may be performed by a sidelink message component 850 as described with reference to FIG. 8.

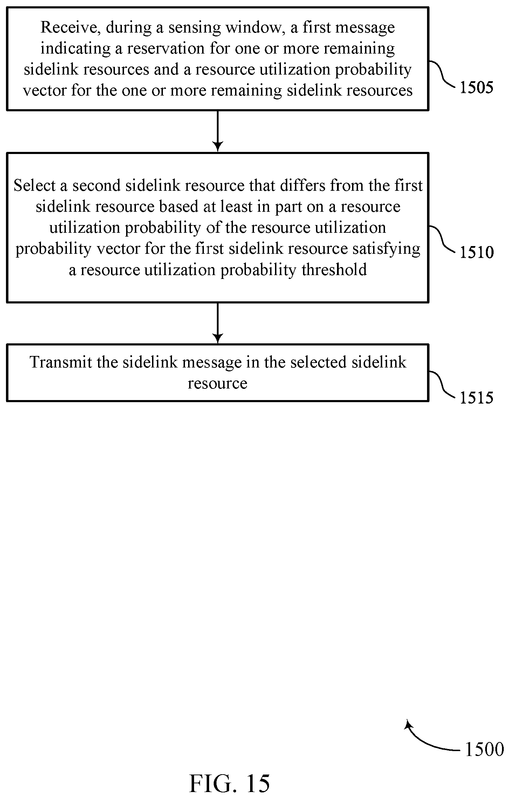

**FIG. 15** shows a flowchart illustrating a method 1500 that supports sidelink resource protection for first transmissions in aperiodic traffic in accordance with aspects of the present disclosure. The operations of the method 1500 may be implemented by a UE or its components as described herein. For example, the operations of the method 1500 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1505, the method may include receiving, during a sensing window, a first message indicating a reservation for one or more remaining sidelink resources and a resource utilization probability vector for the one or more remaining sidelink resources. The operations of 1505 may be performed in accordance with examples as disclosed herein. In some examples, aspects of the operations of 1505 may be performed by a message reception component 840 as described with reference to FIG. 8.

At 1510, the method may include selecting a first sidelink resource of the one or more remaining sidelink resources or a second sidelink resource for transmitting a sidelink message based on the resource utilization probability vector. The operations of 1510 may be performed in accordance with examples as disclosed herein. In some examples, aspects of the operations of 1510 may be performed by a sidelink message resource component 845 as described with reference to FIG. 8.

At 1515, the method may include selecting a second sidelink resource that differs from the first sidelink resource based on a resource utilization probability of the resource utilization probability vector for the first sidelink resource satisfying a resource utilization probability threshold. The operations of 1515 may be performed in accordance with examples as disclosed herein. In some examples, aspects of the operations of 1515 may be performed by a sidelink message resource component 845 as described with reference to FIG. 8.

At 1520, the method may include transmitting the sidelink message in the selected sidelink resource. The operations of 1520 may be performed in accordance with examples as disclosed herein. In some examples, aspects of the operations of 1520 may be performed by a sidelink message component 850 as described with reference to FIG. 8.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a web-site, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the independent claims. Thus, the disclosure is not limited to the examples and designs described herein but is to be accorded the broadest scope consistent with the claims.

## Claims

1. A method for wireless communication at a first user equipment, UE, comprising:
performing (1005, 1105, 1205) a sensing procedure during a sensing window to identify that a first sidelink resource is available;
selecting (1010, 1110, 1210), based at least in part on the sensing procedure, the first sidelink resource for transmitting a first message and one or more remaining sidelink resources for transmitting one or more additional messages that each differ from the first message; and
transmitting (1015, 1115, 1215), via the first sidelink resource, the first message indicating a reservation for the one or more remaining sidelink resources and a resource utilization probability vector for the one or more remaining sidelink resources.

2. The method of claim 1, further comprising:
transmitting (1120) a second message via a second sidelink resource of the one or more remaining sidelink resources, the second message comprising a reservation for one or more additional sidelink resources and a second resource utilization probability vector for the one or more additional sidelink resources; and/or
receiving, from a base station, a configuration message indicating a number of sidelink resources to reserve and a periodicity for the number of sidelink resources; and
transmitting, via the first sidelink resource, the first message indicating the number of sidelink resources and the periodicity.

3. The method of claim 1 or 2, further comprising:
determining one or more parameters from an available parameter pool based at least in part on failing to receive a configuration message from a base station; and
transmitting, via the first sidelink resource, the first message indicating the one or more parameters.

4. The method of one of the claims 1 to 3, wherein transmitting the first message comprises:
transmitting, via the first sidelink resource, the first message indicating a number of resources being reserved and a periodicity of the reserved resources, in particular wherein the number of resources is randomly selected, the periodicity is randomly selected, or both.

5. The method of one of the claims 1 to 4, wherein transmitting the first message comprises:
transmitting, via the first sidelink resource, the first message indicating the reservation that identifies a time period, a time slot, a frequency band, a sub-channel, a bandwidth part, or any combination thereof; and/or
transmitting sidelink control information indicating the resource utilization probability vector for the one or more remaining sidelink resources.

6. The method of one of the claims 1 to 5, further comprising:
receiving (1125) a negative acknowledgement for the first message; and
transmitting (1130), via an additional sidelink resource, an additional message based at least in part on the negative acknowledgement, wherein the additional message is a retransmission of the first message; and/or identifying data available to transmit during the one or more remaining sidelink resources; and
estimating a resource utilization probability for each of the one or more remaining sidelink resources based at least in part on the identifying.

7. The method of one of the claims 1 to 6, further comprising:
receiving (1220), from a second UE during the sensing window, a reservation message indicating a second reservation for a second sidelink resource of the one or more remaining sidelink resources and a second resource utilization probability vector; and
transmitting (1225), during the first sidelink resource, the first message indicating the reservation for the second sidelink resource of the one or more remaining sidelink resources based at least in part on a resource utilization probability indicated in the second resource utilization probability vector for the second sidelink resource failing to satisfy a resource utilization probability threshold, in particular further comprising:
receiving, from a base station, a configuration message indicating the resource utilization probability threshold; and/or
selecting, from a plurality of resource utilization probability thresholds, the resource utilization probability threshold, wherein the selection is rand om or according to a threshold selection rule.

8. A method for wireless communication at a second user equipment, UE, comprising:
receiving (1305, 1405, 1505), during a sensing window, a first message indicating a reservation for one or more remaining sidelink resources and a resource utilization probability vector for the one or more remaining sidelink resources;
selecting (1310) a first sidelink resource of the one or more remaining sidelink resources or a second sidelink resource for transmitting a sidelink message based at least in part on the resource utilization probability vector; and
transmitting (1315, 1415, 1515) the sidelink message in the selected sidelink resource.

9. The method of claim 8, further comprising:
receiving a second message via the first sidelink resource of the one or more remaining sidelink resources based at least in part on the first message; and/or
receiving, from a base station, a configuration message indicating a number of sidelink resources to reserve and a periodicity for the number of sidelink resources; and
receiving, via the first sidelink resource, the first message indicating the number of sidelink resources and the periodicity; and/or
determining one or more parameters from an available parameter pool based at least in part on failing to receive a configuration message from a base station; and
receiving, via the first sidelink resource, the first message indicating the one or more parameters.

10. The method of claim 8 or 9, wherein the selecting further comprises:
selecting (1410) the first sidelink resource based at least in part on a resource utilization probability of the resource utilization probability vector for the first sidelink resource failing to satisfy a resource utilization probability threshold; and/or
selecting (1510) the second sidelink resource that differs from the first sidelink resource based at least in part on a resource utilization probability of the resource utilization probability vector for the first sidelink resource satisfying a resource utilization probability threshold.

11. The method of one of the claims 8 to 10, wherein receiving the first message comprises:
receiving the first message indicating a number of resources being reserved and a periodicity of the reserved resources; and/or
receiving the first message indicating the reservation that identifies a time period, a time slot, a frequency band, a sub-channel, a bandwidth part, or any combination thereof; and/or
receiving sidelink control information indicating the resource utilization probability vector for the one or more remaining sidelink resources.

12. The method of one of the claims 8 to 11, further comprising:
receiving, from a base station, a configuration message indicating a resource utilization probability threshold; and/or
selecting, from a plurality of resource utilization probability thresholds, a resource utilization probability threshold, wherein the selection is random or according to a threshold selection rule.

13. An apparatus for wireless communication at a first user equipment (115), UE, comprising at least one means for performing a method of one of the claims 1 to 7.

14. An apparatus for wireless communication at a second user equipment (115), UE, comprising at least one means for performing a method of one of the claims 8 to 12.

15. A computer program comprising instructions which, when the program is executed by an apparatus for wireless communication, cause the apparatus to carry out the method of one of the claims 1 to 7 or 8 to 12.

## Patentansprüche

1. Verfahren zur drahtlosen Kommunikation an einem ersten Benutzergerät, UE, umfassend:
Durchführen (1005, 1105, 1205) einer Erfassungsprozedur während eines Erfassungsfensters, um zu identifizieren, dass eine erste Sidelink-Ressource verfügbar ist;
Auswählen (1010, 1110, 1210), zumindest teilweise basierend auf der Erfassungsprozedur, der ersten Sidelink-Ressource zum Übertragen einer ersten Nachricht und einer oder mehrerer verbleibender Sidelink-Ressourcen zum Übertragen einer oder mehrerer zusätzlicher Nachrichten, die sich jeweils von der ersten Nachricht unterscheiden; und
Übertragen (1015, 1115, 1215), über die erste Sidelink-Ressource, der ersten Nachricht, die eine Reservierung für die eine oder mehreren verbleibenden Sidelink-Ressourcen und einen Ressourcennutzungswahrscheinlichkeitsvektor für die eine oder mehreren verbleibenden Sidelink-Ressourcen angibt.

2. Verfahren nach Anspruch 1, ferner umfassend:
Übertragen (1120) einer zweiten Nachricht über eine zweite Sidelink-Ressource der einen oder mehreren verbleibenden Sidelink-Ressourcen, wobei die zweite Nachricht eine Reservierung für eine oder mehrere zusätzliche Sidelink-Ressourcen und einen zweiten Ressourcennutzungswahrscheinlichkeitsvektor für die eine oder mehreren zusätzlichen Sidelink-Ressourcen umfasst; und/oder
Empfangen, von einer Basisstation, einer Konfigurationsnachricht, die eine Anzahl von Sidelink-Ressourcen, die zu reservieren sind, und eine Periodizität für die Anzahl von Sidelink-Ressourcen angibt; und
Übertragen, über die erste Sidelink-Ressource, der ersten Nachricht, die die Anzahl von Sidelink-Ressourcen und die Periodizität angibt.

3. Verfahren nach Anspruch 1 oder 2, ferner umfassend:
Bestimmen eines oder mehrerer Parameter aus einem verfügbaren Parameterpool, zumindest teilweise basierend auf dem Fehlschlagen, eine Konfigurationsnachricht von einer Basisstation zu empfangen; und
Übertragen, über die erste Sidelink-Ressource, der ersten Nachricht, die den einen oder die mehreren Parameter angibt.

4. Verfahren nach einem der Ansprüche 1 bis 3, wobei das Übertragen der ersten Nachricht umfasst:
Übertragen, über die erste Sidelink-Ressource, der ersten Nachricht, die eine Anzahl von Ressourcen, die reserviert sind, und eine Periodizität der reservierten Ressourcen angibt, insbesondere wobei die Anzahl von Ressourcen zufällig ausgewählt wird, die Periodizität zufällig ausgewählt wird oder beides.

5. Verfahren nach einem der Ansprüche 1 bis 4, wobei das Übertragen der ersten Nachricht umfasst:
Übertragen, über die erste Sidelink-Ressource, der ersten Nachricht, die die Reservierung angibt, die eine Zeitperiode, einen Zeitschlitz, ein Frequenzband, einen Unterkanal, einen Bandbreitenteil oder eine beliebige Kombination davon identifiziert; und/oder
Übertragen von Sidelink-Steuerinformation, die den Ressourcennutzungswahrscheinlichkeitsvektor für die eine oder mehreren verbleibenden Sidelink-Ressourcen angibt.

6. Verfahren nach einem der Ansprüche 1 bis 5, ferner umfassend:
Empfangen (1125) einer negativen Bestätigung für die erste Nachricht; und
Übertragen (1130), über eine zusätzliche Sidelink-Ressource, einer zusätzlichen Nachricht, die zumindest teilweise auf der negativen Bestätigung basiert, wobei die zusätzliche Nachricht eine erneute Übertragung der ersten Nachricht ist; und/oder Identifizieren von Daten, die zum Übertragen während der einen oder mehreren verbleibenden Sidelink-Ressourcen verfügbar sind; und
Schätzen einer Ressourcennutzungswahrscheinlichkeit für jede der einen oder mehreren verbleibenden Sidelink-Ressourcen basierend zumindest teilweise auf dem Identifizieren.

7. Verfahren nach einem der Ansprüche 1 bis 6, ferner umfassend:
Empfangen (1220), von einem zweiten UE während des Erfassungsfensters, einer Reservierungsnachricht, die eine zweite Reservierung für eine zweite Sidelink-Ressource der einen oder mehreren verbleibenden Sidelink-Ressourcen und einen zweiten Ressourcennutzungswahrscheinlichkeitsvektor angibt; und
Übertragen (1225), während der ersten Sidelink-Ressource, der ersten Nachricht, die die Reservierung für die zweite Sidelink-Ressource der einen oder mehreren verbleibenden Sidelink-Ressourcen angibt, zumindest teilweise basierend auf einer Ressourcennutzungswahrscheinlichkeit, die in dem zweiten Ressourcennutzungswahrscheinlichkeitsvektor für die zweite Sidelink-Ressource angegeben wird, die einen Ressourcennutzungswahrscheinlichkeitsschwellenwert nicht erfüllt, insbesondere ferner umfassend:
Empfangen, von einer Basisstation, einer Konfigurationsnachricht, die den Ressourcennutzungswahrscheinlichkeitsschwellenwert angibt; und/oder
Auswählen, aus einer Vielzahl von Ressourcennutzungswahrscheinlichkeitsschwellenwerten, des Ressourcennutzungswahrscheinlichkeitsschwellenwerts, wobei die Auswahl zufällig oder gemäß einer Schwellenwertauswahlregel erfolgt.

8. Verfahren zur drahtlosen Kommunikation an einem zweiten Benutzergerät, UE, umfassend:
Empfangen (1305, 1405, 1505), während eines Erfassungsfensters, einer ersten Nachricht, die eine Reservierung für eine oder mehrere verbleibende Sidelink-Ressourcen und einen Ressourcennutzungswahrscheinlichkeitsvektor für die eine oder mehreren verbleibenden Sidelink-Ressourcen angibt;
Auswählen (1310) einer ersten Sidelink-Ressource der einen oder mehreren verbleibenden Sidelink-Ressourcen oder einer zweiten Sidelink-Ressource zum Übertragen einer Sidelink-Nachricht basierend zumindest teilweise auf dem Ressourcennutzungswahrscheinlichkeitsvektor; und
Übertragen (1315, 1415, 1515) der Sidelink-Nachricht in der ausgewählten Sidelink-Ressource.

9. Verfahren nach Anspruch 8, ferner umfassend:
Empfangen einer zweiten Nachricht über die erste Sidelink-Ressource der einen oder mehreren verbleibenden Sidelink-Ressourcen basierend zumindest teilweise auf der ersten Nachricht; und/oder
Empfangen, von einer Basisstation, einer Konfigurationsnachricht, die eine Anzahl von Sidelink-Ressourcen, die zu reservieren sind, und eine Periodizität für die Anzahl von Sidelink-Ressourcen angibt; und
Empfangen, über die erste Sidelink-Ressource, der ersten Nachricht, die die Anzahl von Sidelink-Ressourcen und die Periodizität angibt; und/oder
Bestimmen eines oder mehrerer Parameter aus einem verfügbaren Parameterpool, zumindest teilweise basierend auf dem Fehlschlagen, eine Konfigurationsnachricht von einer Basisstation zu empfangen; und
Empfangen, über die erste Sidelink-Ressource, der ersten Nachricht, die den einen oder die mehreren Parameter angibt.

10. Verfahren nach Anspruch 8 oder 9, wobei das Auswählen ferner umfasst:
Auswählen (1410) der ersten Sidelink-Ressource, zumindest teilweise basierend auf einer Ressourcennutzungswahrscheinlichkeit des Ressourcennutzungswahrscheinlichkeitsvektors für die erste Sidelink-Ressource, die einen Ressourcennutzungswahrscheinlichkeitsschwellenwert nicht erfüllt; und/oder
Auswählen (1510) der zweiten Sidelink-Ressource, die sich von der ersten Sidelink-Ressource unterscheidet, zumindest teilweise basierend auf einer Ressourcennutzungswahrscheinlichkeit des Ressourcennutzungswahrscheinlichkeitsvektors für die erste Sidelink-Ressource, die einen Ressourcennutzungswahrscheinlichkeitsschwellenwert erfüllt.

11. Verfahren nach einem der Ansprüche 8 bis 10, wobei das Empfangen der ersten Nachricht umfasst:
Empfangen der ersten Nachricht, die eine Anzahl von Ressourcen, die reserviert sind, und eine Periodizität der reservierten Ressourcen angibt; und/oder
Empfangen der ersten Nachricht, die die Reservierung angibt, die eine Zeitperiode, einen Zeitschlitz, ein Frequenzband, einen Unterkanal, einen Bandbreitenteil oder eine beliebige Kombination davon identifiziert; und/oder
Empfangen von Sidelink-Steuerinformation, die den Ressourcennutzungswahrscheinlichkeitsvektor für die eine oder mehreren verbleibenden Sidelink-Ressourcen angibt.

12. Verfahren nach einem der Ansprüche 8 bis 11, ferner umfassend:
Empfangen, von einer Basisstation, einer Konfigurationsnachricht, die einen Ressourcennutzungswahrscheinlichkeitsschwellenwert angibt; und/oder
Auswählen, aus einer Vielzahl von Ressourcennutzungswahrscheinlichkeitsschwellenwerten, eines Ressourcennutzungswahrscheinlichkeitsschwellenwerts, wobei die Auswahl zufällig oder gemäß einer Schwellenwertauswahlregel erfolgt.

13. Vorrichtung zur drahtlosen Kommunikation an einem ersten Benutzergerät (115), UE, umfassend mindestens ein Mittel zum Durchführen eines Verfahrens nach einem der Ansprüche 1 bis 7.

14. Vorrichtung zur drahtlosen Kommunikation an einem zweiten Benutzergerät (115), UE, umfassend mindestens ein Mittel zum Durchführen eines Verfahrens nach einem der Ansprüche 8 bis 12.

15. Computerprogramm, umfassend Anweisungen, die, wenn das Programm von einer Vorrichtung zur drahtlosen Kommunikation ausgeführt wird, die Vorrichtung veranlassen, das Verfahren nach einem der Ansprüche 1 bis 7 oder 8 bis 12 auszuführen.

## Revendications

1. Un procédé de communication sans fil au niveau d'un premier équipement utilisateur, UE, comprenant :
la réalisation (1005, 1105, 1205) d'une procédure de détection pendant une fenêtre de détection pour identifier qu'une première ressource sidelink est disponible ;
la sélection (1010, 1110, 1210), sur la base au moins en partie de la procédure de détection, de la première ressource sidelink pour transmettre un premier message et d'une ou plusieurs ressources sidelink restantes pour transmettre un ou plusieurs messages supplémentaires qui diffèrent chacun du premier message ; et
la transmission (1015, 1115, 1215), via la première ressource sidelink, du premier message indiquant une réservation pour les une ou plusieurs ressources sidelink restantes et un vecteur de probabilité d'utilisation de ressources pour les une ou plusieurs ressources sidelink restantes.

2. Le procédé selon la revendication 1, comprenant en outre :
la transmission (1120) d'un second message via une seconde ressource sidelink des une ou plusieurs ressources sidelink restantes, le second message comprenant une réservation pour une ou plusieurs ressources sidelink supplémentaires et un second vecteur de probabilité d'utilisation de ressources pour les une ou plusieurs ressources sidelink supplémentaires ; et/ou
la réception, à partir d'une station de base, d'un message de configuration indiquant un nombre de ressources sidelink à réserver et une périodicité pour le nombre de ressources sidelink ; et
la transmission, via la première ressource sidelink, du premier message indiquant le nombre de ressources sidelink et la périodicité.

3. Le procédé selon la revendication 1 ou 2, comprenant en outre :
la détermination d'un ou plusieurs paramètres parmi un groupement de paramètres disponibles, sur la base au moins en partie d'un échec de réception d'un message de configuration à partir d'une station de base ; et
la transmission, via la première ressource sidelink, du premier message indiquant les un ou plusieurs paramètres.

4. Le procédé selon l'une des revendications 1 à 3, dans lequel la transmission du premier message comprend :
la transmission, via la première ressource sidelink, du premier message indiquant un nombre de ressources qui sont réservées et une périodicité des ressources réservées, en particulier dans lequel le nombre de ressources est sélectionné aléatoirement, la périodicité est sélectionnée aléatoirement, ou les deux.

5. Le procédé selon l'une des revendications 1 à 4, dans lequel la transmission du premier message comprend :
la transmission, via la première ressource sidelink, du premier message indiquant la réservation qui identifie une période de temps, un slot temporel, une bande de fréquences, un sous-canal, une partie de bande passante ou toute combinaison de ceux-ci ; et/ou
la transmission d'informations de contrôle sidelink indiquant le vecteur de probabilité d'utilisation de ressources pour les une ou plusieurs ressources sidelink restantes.

6. Le procédé selon l'une des revendications 1 à 5, comprenant en outre :
la réception (1125) d'un accusé de réception négatif pour le premier message ; et
la transmission (1130), via une ressource sidelink supplémentaire, d'un message supplémentaire sur la base au moins en partie de l'accusé de réception négatif, dans lequel le message supplémentaire est une retransmission du premier message ; et/ou l'identification de données disponibles pour être transmises pendant les une ou plusieurs ressources sidelink restantes ; et
l'estimation d'une probabilité d'utilisation de ressources pour chacune des une ou plusieurs ressources sidelink restantes sur la base au moins en partie de l'identification.

7. Le procédé selon l'une des revendications 1 à 6, comprenant en outre :
la réception (1220), à partir d'un second UE pendant la fenêtre de détection, d'un message de réservation indiquant une seconde réservation pour une seconde ressource sidelink des une ou plusieurs ressources sidelink restantes et un second vecteur de probabilité d'utilisation de ressources ; et
la transmission (1225), pendant la première ressource sidelink, du premier message indiquant la réservation pour la seconde ressource sidelink des une ou plusieurs ressources sidelink restantes sur la base au moins en partie d'une probabilité d'utilisation de ressources indiquée dans le second vecteur de probabilité d'utilisation de ressources pour la seconde ressource sidelink ne satisfaisant pas à un seuil de probabilité d'utilisation de ressources, comprenant en outre en particulier :
la réception, à partir d'une station de base, d'un message de configuration indiquant le seuil de probabilité d'utilisation des ressources ; et/ou
la sélection, à partir d'une pluralité de seuils de probabilité d'utilisation de ressources, du seuil de probabilité d'utilisation de ressources, dans lequel la sélection est aléatoire ou selon une règle de sélection de seuil.

8. Un procédé de communication sans fil au niveau d'un second équipement utilisateur, UE, comprenant :
la réception (1305, 1405, 1505), pendant une fenêtre de détection, d'un premier message indiquant une réservation pour une ou plusieurs ressources sidelink restantes et un vecteur de probabilité d'utilisation de ressources pour les une ou plusieurs ressources sidelink restantes ;
la sélection (1310) d'une première ressource sidelink des une ou plusieurs ressources sidelink restantes ou d'une seconde ressource sidelink pour transmettre un message sidelink sur la base au moins en partie du vecteur de probabilité d'utilisation de ressources ; et
la transmission (1315, 1415, 1515) du message sidelink dans la ressource sidelink sélectionnée.

9. Le procédé selon la revendication 8, comprenant en outre :
la réception d'un second message via la première ressource sidelink des une ou plusieurs ressources sidelink restantes sur la base au moins en partie du premier message ; et/ou
la réception, à partir d'une station de base, d'un message de configuration indiquant un nombre de ressources sidelink à réserver et une périodicité pour le nombre de ressources sidelink ; et
la réception, via la première ressource sidelink, du premier message indiquant le nombre de ressources sidelink et la périodicité ; et/ou
la détermination d'un ou plusieurs paramètres parmi un groupement de paramètres disponibles, sur la base au moins en partie d'un échec de réception d'un message de configuration à partir d'une station de base ; et
la réception, via la première ressource sidelink, du premier message indiquant les un ou plusieurs paramètres.

10. Le procédé selon la revendication 8 ou 9, dans lequel la sélection comprend en outre :
la sélection (1410) de la première ressource sidelink sur la base au moins en partie d'une probabilité d'utilisation de ressources du vecteur de probabilité d'utilisation de ressources pour la première ressource sidelink ne satisfaisant pas à un seuil de probabilité d'utilisation de ressources ; et/ou
la sélection (1510) de la seconde ressource sidelink qui diffère de la première ressource sidelink sur la base au moins en partie d'une probabilité d'utilisation de ressources du vecteur de probabilité d'utilisation de ressources pour la première ressource sidelink satisfaisant à un seuil de probabilité d'utilisation de ressources.

11. Le procédé selon l'une des revendications 8 à 10, dans lequel la réception du premier message comprend :
la réception du premier message indiquant un nombre de ressources qui sont réservées et une périodicité des ressources réservées ; et/ou
la réception du premier message indiquant la réservation qui identifie une période de temps, un slot temporel, une bande de fréquence, un sous-canal, une partie de bande passante, ou toute combinaison de ceux-ci ; et/ou
la réception d'informations de contrôle sidelink indiquant le vecteur de probabilité d'utilisation de ressources pour les une ou plusieurs ressources sidelink restantes.

12. Le procédé selon l'une des revendications 8 à 11, comprenant en outre :
la réception, à partir d'une station de base, d'un message de configuration indiquant un seuil de probabilité d'utilisation de ressources ; et/ou
la sélection, à partir d'une pluralité de seuils de probabilité d'utilisation de ressources, d'un seuil de probabilité d'utilisation de ressources, dans lequel la sélection est aléatoire ou selon une règle de sélection de seuil.

13. Un appareil pour la communication sans fil au niveau d'un premier équipement utilisateur (115), UE, comprenant au moins un moyen pour réaliser un procédé selon une des revendications 1 à 7.

14. Un appareil pour la communication sans fil au niveau d'un second équipement utilisateur (115), UE, comprenant au moins un moyen pour réaliser un procédé selon une des revendications 8 à 12.

15. Un programme de calculateur comprenant des instructions qui, lorsque le programme est exécuté par un appareil pour la communication sans fil, amènent l'appareil à réaliser le procédé selon une des revendications 1 à 7 ou 8 à 12.
